(19) Europäisches Patentamt
European Patent Office
Office européen des brevets

(11) EP 0 603 582 B1

(12) EUROPEAN PATENT SPECIFICATION

(45) Date of publication and mention of the grant of the patent: **05.02.1997 Bulletin 1997/06**

(51) Int Cl.[6]: **G03C 11/02**, G03C 5/14, G03C 3/00, G11B 5/633, G11B 5/712, G11B 5/714

(21) Application number: **93119026.8**

(22) Date of filing: **25.11.1993**

# (54) Silver halide photographic material including a magnetic recording layer

Photographisches Silberhalogenidmaterial mit einer magnetischen Aufzeichnungsschicht

Matériau photographique à l'halogénure d'argent comprenant une couche d'enregistrement magnétique

(84) Designated Contracting States:
**DE FR GB NL**

(30) Priority: **26.11.1992 JP 317118/92**

(43) Date of publication of application:
**29.06.1994 Bulletin 1994/26**

(73) Proprietor: **FUJI PHOTO FILM CO., LTD.**
**Kanagawa (JP)**

(72) Inventors:
- **Mukunoki, Yasuo**
  **Minami Ashigara-shi, Kanagawa (JP)**
- **Hayakawa, Akihiro**
  **Minami Ashigara-shi, Kanagawa (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**EP-A- 0 466 130**
**EP-A- 0 476 535**
**WO-A-92/08165**
**US-A- 4 076 890**
**US-A- 4 330 600**
**US-A- 4 620 987**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to a magnetic material and, in particular, to a silver halide photographic material (hereinafter referred to as "a photographic material" or "a photographic film") including a magnetic recording layer containing a magnetic material. The magnetic recording layer has improved transparency and the magnetic material dispersed in the magnetic recording layer has improved stability.

Magnetic recording is an important and widely applicable recording means. Examples of magnetic recording media include video tape, audio tape, computer floppy discs, magnetic cards and the like. These magnetic recording media have different uses and are utilized in different ways. However, they all have a magnetic recording layer on a support. To form the magnetic layer on the support, a ferromagnetic material is dispersed in a binder to form a coating solution which is thinly coated on the support. Analogue signals, such as voice or music analogue signals, or computer digital signals are magnetically recorded on the magnetic recording layer as continuous minute magnets using a magnetic head.

The magnetic recording layer must dependably record and reproduce the information of the original signals as much as possible. The magnetic recording and reproducing characteristics of the magnetic recording layer greatly depend upon the magnetic property of the magnetic material in the magnetic recording layer. In addition, these characteristics also greatly depend upon the dispersibility of the magnetic material in a binder present in the magnetic recording layer.

Specifically, the arrangement of the magnetic material and coagulated solids of the magnetic material in the magnetic recording layer, as well as the ability of the binder for adsorbing to magnetic materials and the size of the secondary coagulated solids of the magnetic material, all influence the magnetic characteristics of the magnetic recording layer. The arrangement of the magnetic material and the coagulated solids of the magnetic material in the magnetic recording layer is influenced by the dispersibility of the magnetic material in the binder.

However, there has heretofore been almost no information relating to the problems of dispersing magnetic materials, although the use of such materials involves extreme difficulties.

One method of producing a photographic material having a magnetic recording layer includes dispersing a magnetic material, such as an acicular magnetic ferric oxide ($\gamma$-$Fe_2O_3$) or an acicular chromium oxide ($CrO_2$), a solvent and other conventional additives in a binder using a mixing and dispersing machine (for example, a kneader, sand mill or the like). The resultant dispersion is filtered to produce a coating solution dispersed. The coating solution dispersed is coated on a support and oriented in a magnetic field.

However, preparing a coating solution dispersed by dispersing a magnetic material in a binder in the above described manner is usually not satisfactory. Moreover, the resulting coating solution dispersed often coagulates in a short period of time, forming coarse grains therein. Accordingly, the preparation of a stable and fine dispersion of a magnetic material is extremely difficult.

Recently, attempts have been made to apply a magnetic recording layer to a photographic film. See, for example, JP-B-42-4539 and JP-B-57-6576. The term "JP-B" as used herein means an "examined Japanese patent publication". Conventional photographic films may have optical information written thereon (for example, the date), but cannot have any other information (for example, picture-taking conditions, objects, number of prints, trimming information, etc.). If a magnetic recording layer is combined with a photographic film, the film may advantageously include such information. If a magnetic recording layer is provided on a photographic film, it is essential that the magnetic recording layer does not reduce the photographic properties of the film, and it is necessary that the magnetic recording layer have sufficient magnetic characteristics in the film.

In a photographic film having a magnetic layer, the transparency of the film may be reduced due to the presence of the magnetic layer. This may be a severe problem with regard to the photographic property of the material. Moreover, if the magnetic material in the magnetic recording layer aggregates into coarse grains, the graininess of the film may be worsened which results in reduction of the photographic property of the film.

Conventional methods for forming a magnetic recording layer include the use of a large amount of a magnetic material dispersed in a small amount of a binder, which results in a coating solution dispersed having high viscosity. This is necessary to form a stable coating solution dispersed that could be stored.

However, if a conventional magnetic coating solution dispersed having such a high viscosity is coated on a support of a photographic film, the magnetic layer formed could not be sufficiently thinned, and the transparency of the resulting film is noticeably reduced. Thus, conventional magnetic coating solution dispersed cannot be used to prepare photographic materials. The use of digital signals has been proposed in order to increase the transparency of a photographic film having a magnetic recording layer thereon. This is because the S/N ratio of the film may be small if digital signals are used. The amount of the magnetic material in the magnetic layer of such a photographic film may be reduced to 1/10 to 1/100 of the same amount as in an ordinary video tape, audio tape or the like, so that sufficient transparency may be achieved.

In order to reduce the amount of the magnetic material in a magnetic recording layer and to reduce the thickness

of the layer itself, the concentration of the magnetic material in the coating solution dispersed must be low and the amount of the binder therein must also be reduced. However, reducing the amount of the magnetic material causes the magnetic material to aggregate in the coating solution dispersed and form solids therein. The solids reduce worsen the photographic properties of the photographic film.

In order to overcome the foregoing problems, modifying the surfaces of the grains of the magnetic material, so as to increase the stability of the material in a coating solution dispersed, has been investigated. For example, the surfaces of the magnetic material have been coated with an extremely thin titanium oxide film. See, JP-A-60-196905, JP-A-58-222433 and JP-A-59-23505. (The term "JP-A" as used herein means an "unexamined published Japanese patent application".) The stability of a magnetic material in a coating solution dispersed has been improved in this manner to some degree. However, the stability is still insufficient when the coating solution is used for preparing a photographic film.

It is the object of the present invention to provide a silver halide photographic material comprising a magnetic material having an improved dispersion stability in a coating solution dispersed containing the magnetic material, said magnetic material being capable of forming a magnetic recording layer on a photographic support, the magnetic recording layer having excellent transparency, and the magnetic photographic film having excellent magnetic characteristics.

According to the present invention this object has been attained by a silver halide photographic material, comprising a support and one or more silver halide emulsion layers located on one or more surfaces of the support, and one or more magnetic recording layers, each magnetic recording layer having a coercive force of at least 400 Oe, characterized in that the magnetic recording layer contains 10 to 300 mg/m$^2$ of a magnetic material comprising magnetic grains which have a surface area of from 2 to 100 m$^2$/g and a mean grain size of from 0.01 to 0.8 μm, and said grains have been surface-treated with 1 to 200% by weight, based upon the weight of the magnetic grains, of at least one silane coupling agent represented by formula (I) and/or titanium coupling agent represented by formula (II):

$$(X_1)_{n1}\text{-Si-}(R_1)_{4-n1} \quad \text{(I)}$$

$$(X_2)_{n2}\text{-Ti-}(R_2)_{4-n2} \quad \text{(II)}$$

wherein

$X_1$ and $X_2$ each represents a halogen atom or a substituted or unsubstituted alkoxy group having from 1 to 20 carbon atoms;

$R_1$ and $R_2$ each represents a substituted or unsubstituted alkenyl or aryl group having from 1 to 45 carbon atoms or a $-(CH_2)_{m1}-(Y)_{n3}-R_4$ group, wherein Y represents -O-, -S-, -NH-, -CO-, -CONH-, -NHCO-, $-SO_2-$, $-SO_2NH-$, $-NHSO_2-$ or $-C_6H_4-$, $R_4$ represents a H atom, $-C_{m2}H_{2m2+1}$, $-C_{m2}H_{2m2-1}-CH=CH_2$, $-CH(CH_3)=CH_2$, $-N(R_5)_2-$, $-N(+)(R_5)_3\cdot Z(-)$, $-[(CH_2)_{m3}O)_{m4}-R_6$, $-(CH_2CH(OH)CH_2O)_{m4}-R_6$, $-(CF_2)_{m2}F$, $(CH_2)_{m2}C_6H_5$, an epoxy group, a glycidyl group, -NCO-, -COOM, $-SO_3M$, $-C_6H_4-R_5$ or $-P(=O)O-P(=O)O(OR_5)_2$, wherein $R_5$ represents an alkyl group having from 1 to 18 carbon atoms, $R_6$ has the same meaning as $R_5$ or represents $-COR_5$, Z represents a Cl atom or a Br atom, m1 is from 0 to 40, m2 is from 1 to 30, m3 is from 1 to 6, m4 is from 1 to 36, n3 is 0 or 1, and M is a sodium atom, a potassium atom, a hydrogen atom or $NH_4$; and

n1 and n2 each represents an integer of from 1 to 3.

The silver halide photographic material of the present invention can be combined with a patrone including a patrone body having a spool rotatably provided therein and a photographic material take out mouth, wherein a top of the material is rolled around the spool and the material is taken out of the patrone through the mouth of the patrone body by rotating the spool in a direction corresponding to feeding out the material from the patrone body.

Further, the silver halide photographic material of the present invention can be combined with photographic camera equipped with a magnetic recording system having a device for writing and reading out magetic recording data, said silver halide photographic material being housed in the camera.

Fig. 1 is a perspective view of a photographic film cartridge in accordance with the present invention.

Fig. 2 is a plan view of the tip of the photographic film partially shown in Fig. 1.

Fig. 3 is a cross-sectional view of the cartridge (i.e., the patrone) shown in Fig. 1 taken along lines 3-3 of Fig. 1.

Fig. 4 is a partially cut-away view of the cartridge of Fig. 1.

Fig. 5 is a plan view of a magnetic recording track layer of a backing layer of a photographic film in accordance with the present invention.

Fig. 5(a) is a cross-sectional view of the photographic film in accordance with the present invention.

In the drawings, 1 is a photographic film cartridge, 2 is a spool, 3 is a photographic film, 4 is a cartridge body, 5 is a film-drawing mouth, 7 is a perforation, 8 is a projection, 9 is a convex part, 10 is a hole, 11 is a notch, 12 is a film-drawing guide, 12 is a step, 14 is an emulsion layer, 15 is a support, 16 is a transparent magnetic layer, 17 comprises an antistatic layer, a scratch-resistant layer and a lubricant layer, 18 is one frame, 19 is a perforation, and t-0, t-1, t-2, t-3, t00, t29 and f00 to f29 each is a magnetic recording track.

The present invention will be explained in detail hereunder.

Referring now to the drawings, where like numbers indicate like elements, Figs. 1-4 shown a preferred photographic film patrone or cartridge 1 in accordance with the invention and including a spool 2 having a photographic film 3 (including a hole 10 and a perforation 7)wound thereon, and a cartridge body 4. Cartridge 1 may have any suitable shape. Preferably, the shape of cartridge 1 is suitable for use with commercial cameras. A cartridge body 1 suitable for use with a so-called 35 mm camera is shown in Fig. 1. Cartridge body 4 includes a film-drawing mouth (i.e., a film take out mouth) 5, a projection 8 and a convex part 9. Notch 11 is provided in mouth 5, a film-drawing path 12 (i.e., a film take out path 12) and step 13 is located inside cartridge body 4 for forming a film drawing guide.

Referring now to Figs. 5(a) and 5(b), one frame 18 of film 3 includes perforation 19 and magnetic recording tracks t-0, t-1, t-2, t-3, t-00, t-29 and f00 to f29, the magnetic tracks being provided as a transparent magnetic layer 16 provided on one side of a support 15 having a light-sensitive emulsion layer 14 provided on another side of support 15. Antistatic layer 17, which also functions as a scratch-resistant layer and a lubricant layer, may be provided on magnetic layer 16.

The magnetic grains suitable for use in the magnetic material in the present invention will now be explained.

The magnetic grains include, for example, ferromagnetic iron oxide grains, Co-containing ferromagnetic iron oxide grains, ferromagnetic chromium dioxide grains, ferromagnetic metal grains, ferromagnetic alloy grains, magnetite grains, Co-containing magnetite grains and barium ferrite grains.

Especially, the magnetic grains are selected from the group consisting of a fine powder of a ferromagnetic iron oxide, a fine powder of a Co-containing ferromagnetic iron oxide, a fine powder of a ferromagnetic chromium dioxide, a fine powder of a ferromagnetic metal, a fine powder of a ferromagnetic alloy, barium ferrite, magnetite or a Co-containing magnetite.

Examples of suitable ferromagnetic alloy grains include those having a metal content of at least 75% by weight, in which at least 80% by weight of the metal content includes one or more ferromagnetic metals or alloys (e.g., Fe, Co, Ni, Fe-Co, Fe-Ni, Co-Ni, Co-Fe-Ni) and at least 20% by weight of the same includes another component or components (e.g., Al, Si, S, Sc, Ti, V, Cr, Mn, Cu, Zn, Y, Mo, Rh, Pd, Ag, Sn, Sb, B, Ba, Ta, W, Re, Au, Hg, Pb, P, La, Ce, Pr, Nd, Te, Bi). The ferromagnetic metal may contain a small amount of water, hydroxides or oxides.

Methods for preparing such ferromagnetic powders are known, and ferromagnetic substances suitable for use in the present invention may be prepared by conventional methods.

The ferromagnetic grains used in the present invention may have any suitable shape and size. The shape may be, for example, acicular, ellipsoidal, spherical, cubic or tabular, acicular and cubic shapes are especially preferred in view of their electromagnetic characteristic. The crystallite size of spherical grains, if used in the present invention, is preferably from 0.01 μm to 0.8 μm, more preferably from 0.02 μm to 0.5 μm. Acicular grains, if used in the present invention, preferably have a size whereby the length in the long axis is preferably from 0.01 to 0.8 μm, the length in short axis is preferably from 0.005 to 0.4 μm and the ratio of the long axis to the short axis is preferably from 100/1 to 2/1. More preferably, the length in the long axis is from 0.04 to 0.4 μm, the length in the short axis is from 0.01 to 0.1 μm, and the ratio of the length in the long axis to the length in the short axis is from 100/1 to 3/1.

If tabular magnetic grains, such as barium ferrite grains, are utilized, the maximum length of the grains is preferably from 0.05 to 0.8 μm and the thickness thereof is preferably from 0.005 to 0.4 μm. More preferably, the maximum length of them is from 0.05 to 0.4 μm and the thickness thereof is from 0.05 to 0.2 μm. The ratio of the maximum length to the thickness of the grains (so-called aspect ratio) is preferably from 2 to 100, more preferably from 4 to 30.

The surfaces of the grains of the present invention are treated with at least one silane coupling agent represented by formula (I) and/or titanium coupling agent represented by formula (II).

$$(X_1)_{n1}\text{-Si-}(R_1)_{4-n1} \quad \text{(I)}$$

$$(X_2)_{n2}\text{-Ti-}(R_2)_{4-n2} \quad \text{(II)}$$

In formulae (I) and (II), $X_1$ and $X_2$ each preferably represents a halogen atom, or a substituted or unsubstituted

alkoxy group having from 1 to 10 carbon atoms, more preferably a Cl atom or $-OR_3$ (wherein $R_3$ is an alkyl group having up to 8 carbon atoms).

More preferably, $X_1$ and $X_2$ each represents a Cl atom, a methyloxy group, an ethyloxy group, a propyloxy group, an isopropyloxy group, a butyloxy group, a cyclohexyloxy group, a chloroethyloxy group, a benzyloxy group or an ethylenedioxy group. Most preferably, $X_1$ and $X_2$ each represents a Cl atom, a methyloxy group, an ethyloxy group, an isopropyloxy group or a butyloxy group.

$R_1$ and $R_2$ each preferably represents $-(CH_2)_{m1}-(Y)_{n3}-R_4$ (wherein Y is -O-, -S-, -NH-, -CO-, -CONH-, -NHCO-, $-SO_2-$, $-SO_2NH-$, $-NHSO_2-$ or $-C_6H_4-$, and $R_4$ represents a hydrogen atom, $-C_{m2}H_{2m2+1}$, $-C_{m2}H_{2m2-1}-CH=CH_2$, $-CH(CH_3)=CH_2$, $-N(R_5)_2-$ (wherein $R_5$ represents an alkyl group having 1 to 18 carbon atoms), $-N^{\oplus}(R_5)_3 \cdot Z^{\ominus}$ (wherein Z is a chlorine or bromine atom), $-[(CH_2)_{m3}O]_{m4}-R_6$ (wherein $R_6$ has the same meaning as $R_5$ or represents $-COR_5$), $-(CH_2CH(OH)CH_2O)_{m4}-R_6$, $-(CF_2)_{m2}F$, $-(CH_2)m_2C_6H_5$, an epoxy group, a glycidyl group, -NCO, -COOM (wherein M is a Na atom, a K atom, a H atom or $NH_4$), $-SO_3M$, $-C_6H_4-R_5$ or $-P(=O)O-P(=O)O(OR_5)_2$, where m1 is from 0 to 40, m2 is from 1 to 30, m3 is from 1 to 6, m4 is from 1 to 36, and n3 is 0, 1 or 2.

Specific examples of compounds represented by formulae (I) and (II) which are suitable for use in the present invention are mentioned below.

Examples of Compounds of Formula (I):

(I)-1: vinyltrichlorosilane
(I)-2: vinyltriethoxysilane
(I)-3: γ-methacryloxypropyltrimethoxysilane
(I)-4: γ-glycidoxypropyltrimethoxysilane
(I)-5: N-β-(aminoethyl)-γ-aminopropylmethyldimethoxysilane
(I)-6: N-phenyl-γ-aminopropyl-trimethoxysilane
(I)-7: vinyloctyltrimethoxysilane
(I)-8: 10-(vinyloxycarbonyl)nonyltrimethoxysilane
(I)-9: P-vinylphenyl-triisopropylsilane
(I)-10: 3-(glycidyloxy)propyl-triethoxysilane
(I)-11: 3-(acryloyl)propyl-trimethoxysilane
(I)-12: 11-(methacryloyl)undecyl-trimethoxysilane
(I)-13: 3-aminopropyl-trimethoxysilane
(I)-14: 3-phenylaminopropyl-trimethoxysilane
(I)-15: 3-N,N-dibutylaminopropyl-trimethoxysilane
(I)-16: 3-trimethylammoniopropyl-trimethoxysilane iodide
(I)-17: 3-mercaptopropyl-trimethoxysilane
(I)-18: 3-isocyanylpropyl-methyldimethoxysilane
(I)-19: 3-(poly(n=10)oxyethynyl)oxypropyltrimethoxysilane
(I)-20: 3-methoxy(poly(n=6)oxyethynyl)oxypropyltrimethoxysilane

Examples of Compounds of Formula (II):

(II)-1: isopropyltriisostearoyl titanate
(II)-2: isopropyltridecylbenzenesulfonyl titanate
(II)-3: isopropyl-tris(dioctylpyrophosphate) titanate
(II)-4: tetraisopropylbis(dioctylphosphite) titanate
(II)-5: tetraoctylbis(ditridecylphosphite) titanate
(II)-6: tetra(2,2'-diallyloxymethyl-l-butyl)bis(ditridecyl)phosphite titanate
(II)-7: bis(dioctylpyrophosphate-oxyacetate) titanate
(II)-8: bis(dioctylpyrophosphate)ethylene titanate
(II)-9: isopropyltrioctanoyl titanate
(II)-10: isopropyldimethacrylisostearoyl titanate
(II)-11: isopropylisostearoyl-diacryl titanate
(II)-12: isopropyltri(dioctylphosphate) titanate
(II)-13: isopropyltricumylphenyl titanate
(II)-14: isopropyltri(N-amidoethylaminoethyl) titanate
(II)-15: dicumylphenyloxyacetate titanate
(II)-16: diisostearoylethylene titanate

The amount of the silane coupling agent and titanium coupling agent applied to the magnetic grains of the present

invention is from 1.0 to 200% by weight, based upon the weight of the magnetic grains. If it is less than 1% by weight, the stability of the liquid containing the grains is poor. If it is greater than 200% by weight, the liquid stability is also poor. Preferably, this range is preferably from 1 to 75% by weight, more preferably from 2 to 50% by weight.

The silane coupling agent and titanium coupling agent (sometimes herein referred to collectively as "the coupling agents") used in the present invention may be applied to the magnetic grains by any conventional method so as to modify the surfaces of the grains, whereby the stability of a coating solution containing the thus treated magnetic material is improved. For instance, the coupling agents may be applied to the magnetic grains by a direct treating method or by an integral blending method. The direct method includes dry methods, slurry methods and spray methods. The magnetic material as treated by the direct treating method is added to a binder, and is excellent for use in the present invention as the surfaces of the magnetic grains are surely modified by the coupling agents applied thereto.

The drying method includes uniformly dispersing the magnetic grains in an aqueous alcoholic solution, an organic solvent solution or an aqueous solution of the silane coupling agent and then drying the grains. In carrying this method, the use of a Henschel mixer, a super mixer, a ready-mixer, a V-shaped blender, an open kneader or the like mixing machine is preferred. Of the foregoing mixing machines, the use of an oven kneader is more preferred. In particular, it is preferred that the magnetic grains be blended in an open kneader along with a small amount of water or a water-containing organic solvent and the coupling agent. The water is then removed from the resulting mixture and the mixture is further ground and finely dispersed.

The slurry method includes adding the coupling agents to a slurry of the magnetic grains. The grains may be formed into a slurry during the production of the same. This method is advantageous since the addition of the coupling agents may be effected during the process of producing the magnetic grains.

The spray method includes adding the coupling agents to the magnetic grains during the step of drying the magnetic material. This method is advantageous since the addition of the coupling agents may be effected during the process of producing the magnetic grains, but it may be disadvantageous since the treatment of the grains with the coupling agents may be uneven.

The integral blending method includes adding both the coupling agents and the magnetic grains to a binder under sufficient stirring. This method is simple.

Any suitable binder may be combined with the magnetic grains used in the present invention to form the magnetic recording layer. The binder may be a conventional thermoplastic resin, thermosetting resin, radiation-hardening resin, reactive resin, acid-decomposing polymer, alkali-decomposing polymer or biodegradable polymer, natural polymers (e.g., a cellulose derivative, or a saccharide derivative) and mixtures thereof, which have heretofore been used as a binder for conventional magnetic recording media. It will be understood that a blend of thermoplastic resins, for example, may be used as the binder.

Of the above-mentioned resins, resins having a glass transition temperature (Tg) of from -40°C to 300°C, more preferably -40°C to 200°C, and having a weight average molecular weight of from 2,000 to 1,000,000, more preferably from 5,000 to 300,000, are preferred.

Examples of suitable thermoplastic resins include: vinyl copolymers, such as vinyl chloride-vinyl acetate copolymer, copolymers of vinyl chloride, vinyl acetate, vinyl alcohol, maleic acid and/or acrylic acid, vinyl chloride-vinylidene chloride copolymer, vinyl chloride-acrylonitrile copolymer, and ethylene-vinyl acetate copolymer; cellulose derivatives, such as nitrocellulose, cellulose diacetate, cellulose triacetate, cellulose acetate propionate, and cellulose acetate butyrate resins; acrylic resins; polyvinyl acetal resins; polyvinyl butyral resins; polyester polyurethane resins; polyether polyurethane resins; polycarbonate polyurethane resins; polyester resins; polyether resins; polyamide resins; amino resins; styrene-butadiene resins; butadiene-acrylonitrile resins and other rubber resins; as well as silicone resins and fluorine resins.

The above-mentioned thermosetting resins and reactive resins may have an extremely high molecular weight when heated, and they include, for example, phenolic resins, phenoxy resins, epoxy resins, hardening polyurethane resins, urea resins, melamine resins, alkyd resins, silicone resins, acrylic reactive resins, epoxy-polyamide resins, nitrocellulose-melamine resins, mixtures of high molecular polyester resins and isocyanate prepolymers, urea-formaldehyde resins, low molecular weight glycol/high molecular weight diol/polyisocyanate mixtures, polyamine resins, and mixtures thereof.

Suitable radiation-hardening resins, include those prepared by introducing carbon-carbon unsaturated bond-having groups, as radiation-hardening functional groups, into the above-mentioned thermoplastic resins. Preferred functional group include an acryloyl group and a methacryloyl group.

Suitable cellulose derivatives include diacetyl cellulose, triacetyl cellulose, acetyldibutyl acetate, tripropionyl acetate and didodecyl acetate.

Polar groups may be included in the above-mentioned binders. Examples of suitable polar groups which may be used in the present invention include an epoxy group, a $CO_2M$ group, an OH group, an $NR_2$ group, an $NR_3X$ group, a $SO_3M$ group, an $OSO_3M$ group, a $PO_3M_2$ group and an $OPO_3M_2$ group where M is a hydrogen atom, an alkali metal or ammonium, and when one group has more than one M group, they may be same or different; and R is a hydrogen

atom or an alkyl group (preferably having 1 to 12 carbon atoms); X represents a halogen atom. Binders containing such polar groups are preferred because the dispersibility of the magnetic material used in the present invention therein is good, and the durability of the magnetic material therein is also good. Further, the use of the fluorine-containing oligomer surfactants according to the present invention further improves the dispersibility and the durability. The amount of the polar groups in the binder may be generally from $10^{-7}$ to $10^{-3}$ equivalents, preferably from $10^{-6}$ to $10^{-4}$ equivalents, to gram of the binder.

The above-mentioned binders may be used singly or in combinations (including of different kinds of binders) thereof. Conventional epoxy, aziridine or isocyanate crosslinking agents and/or radiation-hardening vinyl monomers may be added to the binders for purposes of hardening the binders.

Suitable isocyanate crosslinking agents include polyisocyanate compounds having at least 2 isocyanate groups, including, for example, isocyanates such as tolylene-diisocyanate, 4,4'-diphenylmethane-diisocyanate, hexamethylene-diisocyanate, xylylene-diisocyanate, naphthylene-1,5-diisocyanate, o-toluidine-diisocyanate, isophorone-diisocyanate and triphenylmethane-diisocyanate; reaction products of the foregoing isocyanates and poly-alcohols (e.g., the reaction product of 3 mols of toluene-isocyanate and one mol of trimethylolpropane); and poly-isocyanates formed by condensation of the foregoing isocyanates.

Suitable radiation-hardening vinyl monomers which may be included in the binder include compounds which are polymerizable by radiation and which contain one or more carbon-carbon unsaturated bonds in the molecule. They include, for example, (meth)acrylates, (meth)acrylamides, allyl compounds, vinyl esters, vinyl-heterocyclic compounds, N-vinyl compounds, styrenes, (meth)acrylic acids, crotonic acid, itaconic acid and olefinic acids. Preferably, the radiation-hardening vinyl monomers include two or more (meth)acryloyl groups, for example, polyethylene glycol (meth) acrylates, such as diethylene glycol di(meth)acrylate and triethylene glycol di(meth)acrylate, as well as trimethylol propane tri(meth)acrylate, pentaerythritol tetra(meth)acrylate, dipentaerythritol penta(meth)acrylate, dipentaerythritol hexa(meth)acrylate and reaction products of polyisocyanates and hydroxy(meth)acrylate compounds.

These crosslinking agents are preferably combined with the binder in an amount of from 5 to 45% by weight based upon the weight of the binder.

A hydrophilic binder may be utilized in the magnetic recording layer according to the present invention.

Suitable hydrophilic binders are described in Research Disclosure No. 17643, page 26 and No. 18716, page 651 may be used, and include, for example, water-soluble polymers, cellulose esters, latex polymers, and water-soluble polyesters. Suitable water-soluble polymers include, for example, gelatin, gelatin derivatives, casein, agar, sodium alginate, starch, polyvinyl alcohol, polyacrylic acid copolymers, and maleic anhydride copolymers. Suitable cellulose esters include, for example, carboxymethyl cellulose and hydroxyethyl cellulose. Suitable latex polymers include, for example, vinyl chloride-containing copolymers, vinylidene chloride-containing copolymers, acrylate-containing copolymers, vinyl acetate-containing copolymers, and butadiene-containing copolymers. Of the foregoing, gelatin is most preferred.

Gelatin may be classified, depending upon the process used to produce it, into a so-called "alkali-processed" (or lime-processed) gelatin which is produced by dipping gelatin in an alkaline bath prior to extraction of the gelatin, acid-processed gelatin which is produced by dipping gelatin in an acid bath, a double-processed gelatin which is produced using both of the treatment discussed above, and enzyme-processed gelatin. Any type of gelatin may be used in the present invention. If desired, the gelatin for use in the present invention may be combination-used with or may partially be substituted by cellulose derivatives, such as colloidal albumin, casein, carboxymethyl cellulose or hydroxyethyl cellulose, saccharide derivatives, such as agar, sodium alginate, starch derivatives or dextran, synthetic hydrophilic colloids, such as polyvinyl alcohol, poly-N-vinylpyrrolidone, polyacrylic acid polymers, polyacrylamide or their derivatives or partial hydrolysates, or gelatin derivatives.

Preferably, the magnetic recording layer contains gelatin and is hardened. Suitable hardening agents include, for example, aldehyde compounds, such as formaldehyde and glutaraldehyde; ketone compounds, such as diacetyl and cyclopentanedione; bis(2-chloroethylurea); 2-hydroxy-4,6-dichloro-1,3,5-triazine, and other reactive halogen-containing compounds described in U.S. Patents 3,288,775 and 2,732,303 and British Patents 974,723 and 1,167,207; divinylsulfone; 5-acetyl-1,3-diacryloylhexahydro-1,3,5-triazine, and other reactive olefin compounds as described in U.S. Patents 3,635,718 and 3,232,763 and British Patent 994,869; N-hydroxymethylphthalimide, and other N-methylol compounds as described in U.S. Patents 2,732,316 and 2,586,168; isocyanates, as described in U.S. Patent 3,103,437; aziridine compounds, as described in U.S. Patents 3,017,280 and 2,983,611; acid derivatives, as described in U.S. Patents 2,725,294 and 2,725,295; epoxy compounds, as described in U.S. Patent 3,091,537; and halogenocarboxyaldehydes, such as mucochloric acid. Suitable inorganic compound hardening agents include chromium alum, zirconium sulfate, and other carboxyl-reactive hardening agents as described in JP-B-56-12853, JP-B-58-32699, Belgian Patent 825,726, JP-A-60-225148, JP-A-51-126125, JP-B-58-50699, JP-A-52-54427, and U.S. Patent 3,321,313.

The amount of the hardening agent present in the magnetic recording layer is preferably from 0.01 to 30% by weight, more preferably from 0.05 to 20% by weight, based upon the weight of dry gelatin.

The thickness of the magnetic recording layer is preferably from 0.1 μm to 10 μm, more preferably from 0.2 μm to

5 μm, and most preferably from 0.3 μm to 3 μm.

The weight ratio of the magnetic grains to the binder in the magnetic recording layer is preferably from 1/100 to 40/100, more preferably from 5/100 to 30/100.

The magnetic recording layer containing the magnetic material in accordance with the present invention is provided in a silver halide photographic material, i.e., a photographic film.

The photographic material will now be described.

The magnetic recording layer may be formed wholly or in a stripewise manner on a back surface of a photographic support by coating or printing. It is preferred that a binder solution containing magnetic grains dispersed therein and a binder solution for forming a support be co-spread wholly or in a stripewise manner on a substrate to form a support having a magnetic recording layer thereon. The composition of the binder containing the magnetic grains and the composition of the binder for forming the support may be different from each other, but preferably they are the same.

Any suitable method may be used to coat the magnetic recording layer on the support including, for example, air doctor coating, blade coating, air knife coating, squeeze coating, impregnation coating, reverse roll coating, transfer roll coating, gravure coating, kiss coating, cast coating, spray coating, dip coating, bar coating and extrusion coating methods. Detailed explanations of the coating methods are described in, for example, Coating Engineering, pp. 253 to 277 (published by Asakura Shoten on March 20, 1971).

After the magnetic recording layer has been coated on a support, it is oriented and, optionally, the magnetic material in the layer is immediately dried. Then, the thus formed magnetic recording layer is dried. When forming the magnetic recording layer, the velocity of the support is generally from 2 to 500 m/min (preferably from 20 to 200 m/min), and the drying temperature is within the range of from 20 to 250°C (preferably from 50 to 200°C). If desired, the surface of the magnetic recording layer may be smoothed. In this way, the magnetic recording layer according to the present invention is formed. Formation of a magnetic recording layer is described in, for example, JP-B-40-23625, JP-B-39-28368 and U.S. Patent 3,473,960. Reference may also be had to the method disclosed in JP-B-41-13181 which is considered to be a basic and important technique in this technical field.

The magnetic recording layer according to the present invention may function to improve the lubricating property of the photographic material in accordance with the present invention, as well as prevent curling of the material, reduce static charge from accumulating therein and reduce sticking of the material. Alternatively, additional layers may be formed over the magnetic recording layer to perform such functions. If desired, a protective layer may be provided adjacent to the magnetic recording layer so as to improve the scratch resistance of the magnetic recording layer. For instance, addition of inorganic or organic fine grains (such as fine grains of $SiO_2$, $SnO_2$, $Al_2O_3$, $TiO_2$, crosslinked polymethyl methacrylate, barium carbonate, silicon) to the layer is preferred for improving the scratch resistance of the layer.

The back surface of a support having the magnetic recording layer thereon may be calendered so as to improve the smoothness of the support to thereby improve the S/N ratio of magnetic signals applied thereto. Photographic layers are preferably coated on the surface of the support opposite to the calendered back surface, as will be discussed below.

Any suitable support may be employed in producing the photographic material of the present invention. The support may be any conventional plastic film. Preferably, the film is a cellulose derivative, e.g., diacetyl-acetate, triacetyl-acetate, propionyl-acetate, butanoyl-acetate or acetylpropionyl-acetate; a polyamide; a polycarbonate as described in U. S. Patent 3,023,101, a polyester as described in JP-B 48-40414, e.g., polyethylene terephthalate, poly-1,4-cyclohexanedimethylene terephthalate, polyethylene naphthalate; a polystyrene; a polypropylene; a polyethylene; a polysulfone; a polyarylate and a polyether imide. More preferably, the support is triacetyl cellulose or polyesters such a as polyethylene terephthalate, polyethylene naphthalate or polyarylate.

The film comprising the support may contain a compound having polar groups, e.g., an epoxy group, a $COO_2M$ group, a OH group, a $NR_2$ group, a $NR_3X$ group, a $SO_3M$ group, a $OSO_3M$ group, a $PO_3M_2$ group, or a $OP_3M_2$ group, wherein M is a H atom, an alkali metal or ammonium, and R is a H atom or an alkyl group having from 1 to 20 carbon atoms.

More preferably, the support used in the invention is polyethylene terephthalate, polyethylene naphthalate or polyarylate. Preferably, the supports are heat-treated at a temperature up to the Tg of the support so as to reduce their propensity to curl. For example, polyethylene having a Tg of about 120°C may be heat-treated at a temperature of up to 119°C for a period of from 0.2 to 48 hours, more preferably at 115°C for 24 hours. In order to effect the heat treatment at a shorter period of time, the support may be first heated to a temperature higher than the Tg thereof and then gradually cooled to a temperature of about the Tg thereof. The heat treatment in accordance with the process is especially preferred to obtain the high efficiency for the heat treatment of the supports. Polyethylene terephthalate may be first heated to a temperature falling within the range of from 130°C to 200°C and then cooled to 125°C and thereafter further cooled gradually to 100°C over a period of 40 minutes. In this way, the time needed for the heat treatment of polyethylene terephthalate may be shortened extremely.

The thickness of the support in accordance with the present invention may be preferably from 60 μm to 300 μm,

more preferably from 70 μm to 200 μm. If the thickness is less than 60 μm, the support may be easily broken when rapid tensile power is imparted thereto. On the other hand, if the thickness of the support is more than 300 μm, the photographic film would fail to contact a magnetic head when it is housed in a film cartridge for a long period of time, although the film strength is increased. In particular, when such a film having a support thickness of greater than 300 μm is housed in an automatic feeding cartridge, such as that described in U.S. Patent 4,913,368, the magnetic characteristics of the film deteriorate.

The support of the photographic material in accordance with the present invention may contain a plasticizer so as to be soft and flexible. A plasticizer, such as triphenyl phosphate, biphenyl diphenyl phosphate or dimethylethyl phosphate, may be utilized in cellulose ester supports.

In order to firmly fix photographic layers (e.g., a light-sensitive silver halide emulsion layer, an interlayer, a filter layer, a transparent magnetic layer in accordance with the present invention, or an electroconductive layer) onto the support, the surface of the support may be previously activated by chemical treatment, mechanical treatment, corona discharging treatment, flame treatment, ultraviolet treatment, high frequency treatment, glow discharging treatment, active plasma treatment, laser treatment, mixed acid treatment and ozone oxidation treatment, and thereafter photographic emulsions may be directly coated over the thus-surface-treated support to obtain adhesion therebetween. Alternatively, after the surface treatment or without it, a subbing layer may be provided on the support and a photographic emulsion layer or layers may be coated thereover. Preferably, the support is subjected to corona discharging treatment, flame treatment, ultraviolet treatment or glow discharge treatment, in which a support is heat-treated at a high temperature, for example, at least 100°C, preferably at least 200°C, preferably for a period of from several seconds to several minutes (preferably from 10 seconds to 10 minutes).

A single layer of a gelatin solution dispersed in a mixed solvent of methylene chloride/ketone/alcohol may be formed on a cellulose derivative support to form a subbing layer thereon.

Any suitable hardening agent may be used for hardening the gelatin in the subbing layer including, for example, chromium salts, such as chromium alum; aldehydes, such as formaldehyde, glutaraldehyde; isocyanates; active halogen-containing compounds, such as 2,4-dichloro-6-hydroxy-s-triazine; epichlorohydrin resins; and vinyl-sulfoalkyl hardening agents. The coating solution for the subbing layer may contain various additives, if desired. For instance, the subbing layer coating solution may contain a surfactant, an antistatic agent, an antihalation agent, a coloring dye or pigment, a coating aid or an anti-foggant. The coating solution for the subbing layer may contain an etching agent, such as resorcinol, chloral hydrate or chlorophenol.

The subbing layer used in the present invention may contain fine inorganic grains, such as $SiO_2$ or $TiO_2$ grains or fine polymethyl methacrylate copolymer grains, having a size of 0.1 to 10 μm as a matting agent.

The subbing layer coating solution may be coated over the support by any known coating method, for example, by a dip coating method, air knife coating method, curtain coating method, roller coating method, wire bar coating method or gravure coating method, or by the hopper extrusion coating method described in U.S. Patent 2,681,294. If desired, two or more layers may be coated simultaneously by the methods described in U.S. Patents 2,761,791, 3,508,947, 2,941,898 and 3,526,528 and Y. Harazaki, Coating Engineering, page 253 (published by Asakura Shoten Co.).

Any suitable antistatic agent may be used in the present invention, and may be located in any suitable layer. The antistatic agent may be either an electroconductive antistatic agent or a compound having a charging arrangement controlling function.

The antistatic agent is selected from the group consisting of an electroconductive metal oxide, an ionic polymer having an electric resistivity of up to $10^{12}$ Ω/cm at 25°C and 10% relative humidity, a fluorine-containing compound and mixtures thereof.

Examples of suitable electroconductive antistatic agents include ionic compounds and metal oxides. Suitable ionic compounds include anionic polyelectrolytes, such as carboxylate, sulfonate or phosphate salts, for example, the polymers described in JP-A-48-22017, JP-B-46-24159, JP-A-51-30725, JP-A-51-129216 and JP-A-55-95942, and the cationic polymers described in JP-A-49-121523, JP-A-48-91165 and JP-B-49-24582.

In addition, ionic surfactants are also useful as electroconductive antistatic agents. Such surfactants are described in, for. example, JP-A-49-85826, JP-A-49-33630 and JP-A-48-87826, JP-B-49-11567 and JP-B-49-11568, JP-A-55-70837, and U.S. Patents 2,992,108 and 3,206,312.

Preferably, metal oxides and their derivatives are used as electroconductive antistatic agents in the present invention. For example, the antistatic agent may be fine grains, e.g., acicular, spherical, tabular or amorphous fine grains, of one or more crystalline metal oxides or composite oxides selected from the following: ZnO, $TiO_2$, $SnO_2$, $Al_2O_3$, $In_2O_3$, $SiO_2$, MgO, BaO, $MoO_3$ and $V_2O_5$.

Preferably, the fine grains of these crystalline metal oxides or composite oxides have a volume resistivity of up to $10^7$ Ω/cm, preferably up to $10^5$ Ω/cm. The grain size thereof is preferably from 0.001 to 1.0 μm, more preferably from 0.002 to 0.7 μm. Suitable fine grains of crystalline metal oxides or composite oxides are described in JP-A-56-143430 and JP-A-60-258541. Suitable metal oxide or composite oxide fine grains may be produced by a method including

firing of fine grains of a metal oxide followed by heat-treating in the presence of a hetero atom or atoms, as defined below, so as to improve their electroconductivity. Another method of preparing the fine grains of a metal oxide includes simply firing in the presence of a hetero atom or atoms. A third method of preparing the fine grains of a metal oxide includes firing in a low oxygen concentration firing atmosphere, so as to introduce oxygen defects into the grains. Suitable hetero atoms include Al and In for ZnO; Nb and Ta for $TiO_2$; and Sb, Nb, P, B, In, V and halogens for $SnO_2$. The amount of the hetero atom or atoms added is preferably from 0.01 mol% to 30 mol%, more preferably from 0.1 mol% to 10 mol%, based upon the amount in terms of moles of the base atom. The fine grains of crystalline metal oxide or composite oxide may be present on the surfaces of other fine grains, such as acicular potassium titanate grains and tabular barium sulfate grains.

The silver halide photographic material including a magnetic recording layer in accordance with the present invention includes a silver halide emulsion layer or layers, and optionally a backing layer or layers, a protective layer or layers, an interlayer or interlayers, an antihalation layer or layers and other layers which will be apparent to one skilled in the art and which are essentially hydrophilic colloid layers.

The binder of the various hydrophilic colloid layers of the photographic material in the present invention is made of, for example, proteins, such as gelatin, colloidal albumin or casein; cellulose compounds, such as carboxymethyl cellulose or hydroxyethyl cellulose; saccharide derivatives, such as agar, sodium alginate or starch derivatives; synthetic hydrophilic colloids, such as polyvinyl alcohol, poly-N-vinylpyrrolidone, polyacrylic acid copolymers, polyacrylamide or their derivatives or partial hydrolysates thereof; and dextran, polyvinyl acetate, polyacrylates and rosins. If desired, a mixture comprising two or more of the foregoing may be employed as the binder.

Of the above-mentioned binders, gelatin and its derivatives are used most frequently, and are preferred in the present invention. As discussed above, gelatin includes a so-called lime-processed gelatin (generally containing from 10 to 10000 ppm of calcium ions), so-called acid-processed gelatin and so-called enzyme-processed gelatin, any of which may be used as a binder for the various hydrophilic colloid layers of the material of present invention.

The photographic material of the present invention may contain one or more anionic, nonionic, cationic and betainic fluorine-containing surfactants.

Examples of suitable fluorine-containing surfactants are described in, for example, JP-A-49-10722, British Patent 1,330,356, JP-A-53-84712, JP-A-54-14224 and JP-A-50-113221, U.S. Patents 4,335,201 and 4,347,308, British Patent 1,417,915, JP-B-52-26687, JP-B-57-26719 and JP-B-59-38573, JP-A-55-149938, JP-A-54-48520, JP-A-54-14224, JP-A-58-200235, JP-A-57-146248 and JP-A-48-196544, and British Patent 1,439,402.

Examples of preferred fluorine-containing surfactants include the following:

F-1

$$C_8F_{17}SO_3K$$

F-2

$$C_7F_{15}COONa$$

F-3

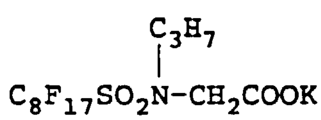

F-4

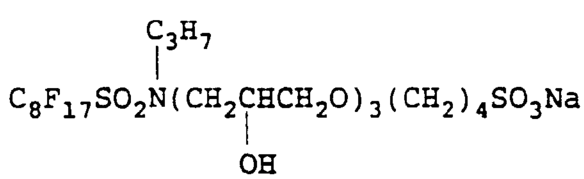

F-5

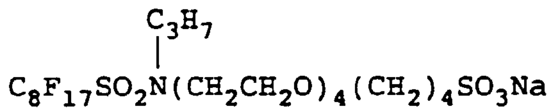

F-6

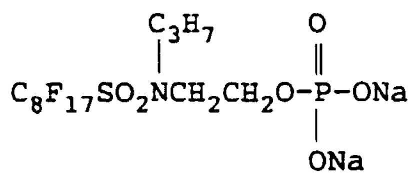

F-7

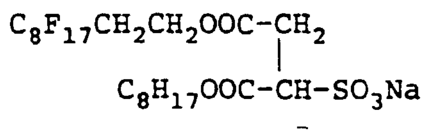

F-8

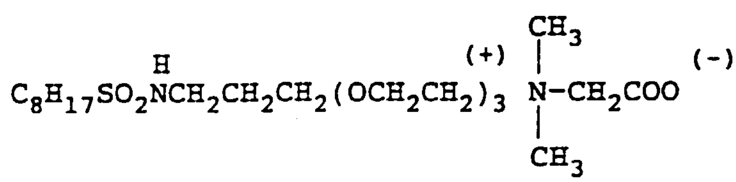

F-9

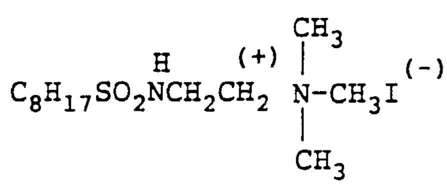

F-10

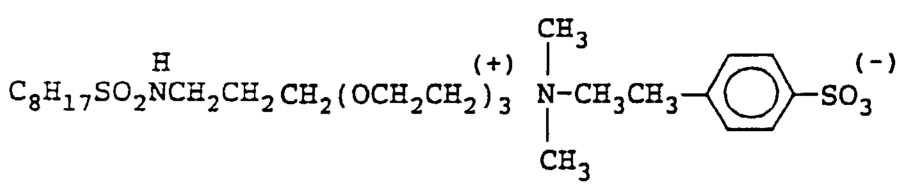

F-11

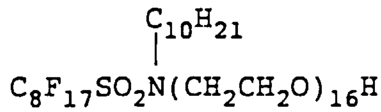

As mentioned above, nonionic surfactants may also be used in the present invention.

Examples of preferred nonionic surfactants include the following:

N-1 $C_{11}H_{23}COO(CH_2CH_2O)_8H$

N-2

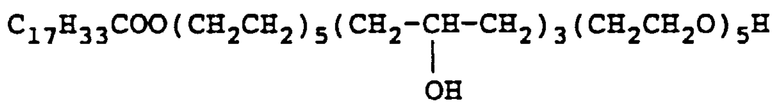

N-3 $C_{16}H_{23}O(CH_2CH_2O)_{12}H$

N-5

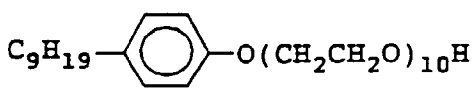

N-6

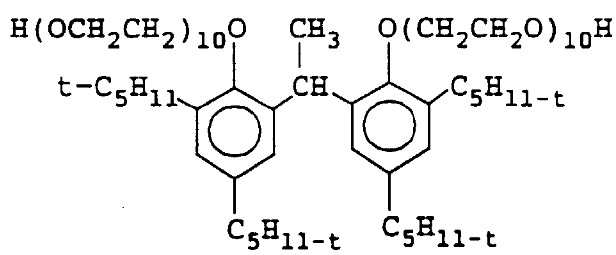

Preferably, one or more fluorine-containing surfactants and one or more nonionic surfactants are added to at least one layer of the photographic material of the present invention. For example, such a surfactant system may be added to one or more of the following layers: a surface protective layer or layers, an emulsion layer or layers, an interlayer or interlayers, a subbing layer or layers and a backing layer or layers.

It utilized in the present invention, the amount of the fluorine-containing surfactant or surfactants and nonionic surfactant or surfactants present in the photographic material of the present invention is preferably from 0.0001 g to 1 g, more preferably from 0.0005 g to 0.5 g, and most preferably from 0.0005 g to 0.2 g, per $m^2$ of the material. The photographic material of the present invention may contain two or more of one kinds of the foregoing mentioned types of surfactants as a mixture thereof.

A polyol compound of, for example, ethylene glycol, propylene glycol or 1,1,1-trimethylolpropane, such as those described in JP-A-54-89626, may be added to as a film improver one or more of the protective layers or any other

layer or layers of the photographic material of the present invention.

It will be understood that the various layers of the photographic material in the present invention may contain any other known surfactant or surfactants either singularly or in combination. The surfactants act as a coating aid or, as the case may be, they may act for other purposes. For example, the surfactants may aid in emulsifying and dispersing the coating compositions used for forming the various layers of the photographic material of the present invention, or they may be used to increase the sensitivity of the material or improve other photographic properties of the material.

The photographic film of the present invention preferably contains a lubricant in any suitable layer or layers, as will be discussed below.

Examples of suitable lubricants which may be included in the photographic film of the present invention include: polyorganosiloxanes, such as those described in JP-B-52-292; higher fatty acid amides, such as those described in U.S. Patent 4,275,146; higher fatty acid ester, such as esters of fatty acids having from 10 to 24 carbon atoms and alcohols having from 10 to 24 carbon atoms, such as described in, for example, JP-B-58-33541, British Patent 927,446, JP-A-55-126238 and JP-A-58-90633; metal salts of higher fatty acids, such as those described in, for example, U.S. Patent 3,933,516; esters of linear higher fatty acids and linear higher alcohols, such as those described in, for example, JP-A-58-50534; and branched alkyl group-containing higher fatty acid-higher alcohol esters, such as those described in International Patent (Laid-Open) No. 90108115.8.

Suitable polyorganosiloxanes include: polyalkylsiloxanes, such as polydimethylsiloxane and polydiethylsiloxane; and polyarylsiloxanes, such as polydiphenylsiloxane and polymethylphenylsiloxane; which are generally known, and also modified polysiloxanes, such as organopolysiloxanes having alkyl groups containing at least 5 carbon atoms; alkylpolysiloxanes having polyoxyalkylene groups in side chains thereof; and organopolysiloxanes having alkoxy, hydroxy, hydrogen, carboxyl, amino and/or mercapto groups in side chains thereof, as described in, for example, JP-B-53-292, JP-B-55-49294 and JP-A-60-140341. Suitable polyorganosiloxanes also include block copolymers having siloxane units, as well as graft copolymers having siloxane units in side chains thereof, such as those described in, for example, JP-A-60-191240.

Examples of preferred polyorganosiloxane compounds include the following:

(S-1) $(CH_3)_3SiO\text{-}(Si(CH_3)_2O)_a\text{-}Si(CH_3)_3$ a=5-1000

(S-2) $(C_6H_5)_3SiO\text{-}(Si(CH_3)_2O)_a\text{-}Si(CH_3)_3$ a=5-1000

(S-3) 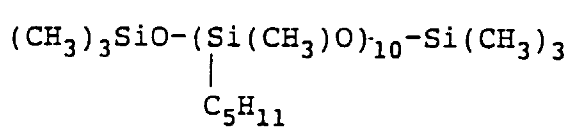

(S-4) 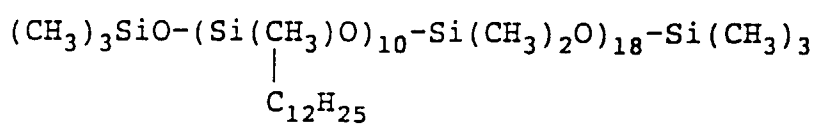

(S-5)

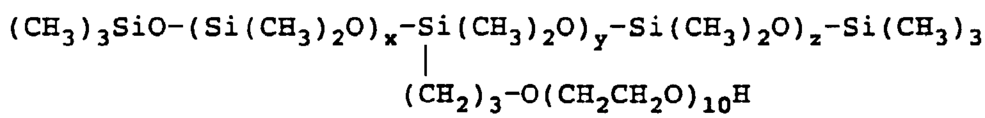

x= 1 to 20
y= 2 to 15

z= 1 to 20
provided x+y+z=30

(S-6)

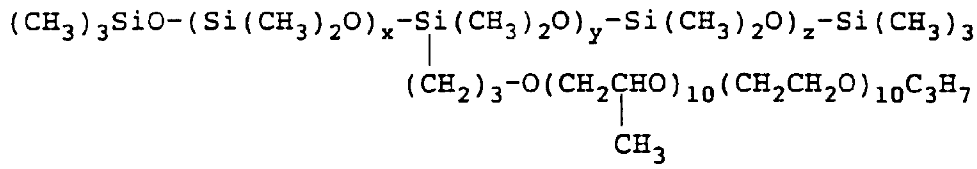

x= 1 to 25
y= 2 to 20
z= 1 to 25
provided x+y+z=35

Suitable higher fatty acids which may be used in the lubricants include: higher fatty acids, metal salts of higher fatty acids, esters of higher fatty acids, higher fatty acid amides, esters of higher fatty acids and polyalcohols, and salts of the foregoing. Suitable higher alcohols which may be used in the lubricants include higher aliphatic alcohols, and monoalkyl phosphites of higher aliphatic alcohols, dialkyl phosphites of higher aliphatic alcohols, trialkyl phosphites of higher aliphatic alcohols, monoalkyl phosphates of higher aliphatic alcohols, dialkyl phosphates of higher aliphatic alcohols and trialkyl phosphates of higher aliphatic alcohols, and derivatives thereof. Higher aliphatic alkylsulfonic acids and amides or salts thereof are also useful in the lubricants.

Preferably, the lubricant used in the present invention is represented by the following formulae (3) to (8):

(3) $R_{11}$-COO-$R_{12}$
(4) $R_{13}$-OCO-$R_{14}$
(5) $R_{15}$-OCOX-COOR$_{16}$
(6) $R_{17}$-COOX-OCOR$_{18}$
(7) $R_{12}$-O(ZO)n$R_{19}$
(8) $R_{12}$-COO(ZO)n$R_{19}$

wherein

$R_{11}$ represents a linear aliphatic hydrocarbon group preferably having from 3 to 100 carbon atoms;
$R_{12}$ represents a linear aliphatic hydrocarbon group preferably having from 8 to 100 carbon atoms;
$R_{13}$ and $R_{14}$ each represents an aliphatic hydrocarbon group having at least 12 carbon atoms, provided either $R_{13}$ or $R_{14}$ is a branched aliphatic hydrocarbon group and the number of the total carbon atoms present in $R_{13}$ and $R_{14}$ is from 32 to 150;
$R_{15}$, $R_{16}$, $R_{17}$, $R_{18}$ and $R_{19}$ each represents a linear or branched aliphatic hydrocarbon group having from 12 to 80 carbon atoms; and $R_{19}$ represents a hydrogen atom, a linear or branched aliphatic hydrocarbon group having from 1 to 24 carbon atoms, or a linear or branched aliphatic hydrocarbon having from 1 to 24 carbon atoms containing a carbonyl group;
X represents a divalent linking group;
Z represents an ethylene group, a propylene group, a butylene group, a glycerin group or a styrene group; and n represents an integer of from 2 to 100 (preferably from 2 to 50, more preferably from 2 to 20).

Examples of preferred lubricant compounds include the following:

(3-1) n-$C_{15}H_{31}COOC_{30}H_{61}$-n
(3-2) n-$C_{17}H_{35}COOC_{30}H_{61}$-n
(3-3) n-$C_{15}H_{31}COOC_{30}H_{61}$-n
(3-4) n-$C_{15}H_{31}COOC_{40}H_{81}$-n
(3-5) n-$C_{15}H_{31}COOC_{50}H_{101}$-n
(3-6) n-$C_{27}H_{43}COOC_{28}H_{57}$-n

(4-1) 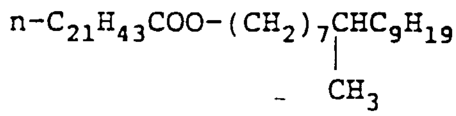

(4-2) 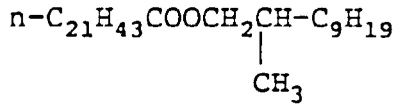

(4-3) $n\text{-}C_{21}H_{43}COOC_{24}H_{49}\text{-iso}$
(5-1) $n\text{-}C_{29}H_{49}OCO(CH_2)_2COOC_{24}H_{49}\text{-n}$
(5-2) $n\text{-}C_{18}H_{37}OCO(CH_2)_4COOC_{40}H_{81}\text{-n}$
(5-3) $n\text{-}C_{18}H_{37}OCO(CH_2)_{18}COOC_{18}H_{37}\text{-n}$
(5-4) $\text{iso-}C_{24}H_{49}OCO(CH_2)_4COOC_{24}H_{49}\text{-n}$
(5-5) $n\text{-}C_{40}H_{81}OCO(CH_2)_2COOC_{50}H_{101}\text{-n}$
(6-1) $n\text{-}C_{17}H_{35}COO(CH_2)_6OCOC_{17}H_{35}\text{-n}$
(6-2) $n\text{-}C_{21}H_{43}COO(CH_2)_{18}OCOC_{21}H_{43}\text{-n}$
(6-3) $\text{iso-}C_{23}H_{47}COO(CH_2)_2OCOC_{23}H_{47}\text{-n}$
(6-4) $\text{iso-}C_{15}H_{31}COO(CH_2)_6OCOC_{21}H_{43}\text{-n}$
(7-1) $n\text{-}C_{30}H_{61}O(CH_2CH_2O)_{10}H$
(7-2) $n\text{-}C_{40}H_{81}O(CH_2CH_2O)_{15}H$
(7-3) $n\text{-}C_{50}H_{101}O(CH_2CH_2O)_{15}H$
(7-4) $n\text{-}C_{50}H_{101}O(CH_2CH_2O)_{30}H$
(7-5) $n\text{-}C_{40}H_{81}O(CH_2CH_2O)_{10}H$
(7-6) $n\text{-}C_{50}H_{101}(CH_2CH_2O)_{16}H$
(7-7) $n\text{-}C_{50}H_{101}\text{-}(CH_2(CH_3)CH_2O)_3(CH_2CH_2O)_{16}H$

(7-8) 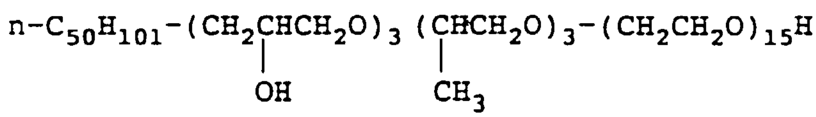

(8-1) $n\text{-}C_{40}H_{81}OCOCH_2CH_2COO(CH_2CH_2O)_{16}H$
(8-2) $n\text{-}C_{50}H_{101}OCOCH{=}CHCOO(CH_2CH_2O)_{16}H$

(8-3)

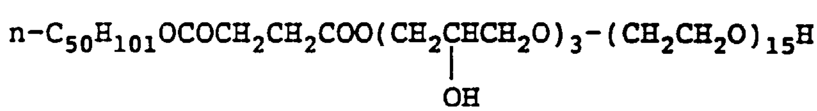

Including a lubricant in the silver halide photographic material of the present invention increases the scratch hardness of the material. In addition, the material, due to the presence of the lubricant, is free from repelling on the surface of a subbing layer. Also, the sliding property of the material is not reduced, even after development of the material, due to the presence of the lubricant. Any suitable amount of the lubricant may be used in the photographic material of the present invention. Preferably, the amount of the lubricant is from 0.0005 to 2 g/m$^2$, more preferably from 0.001 to 1 g/m$^2$, and most preferably from 0.002 to 0.5 g/m$^2$.

The lubricant may be added to any suitable layer or layers of the photographic material of the present invention. Preferably, the lubricant is added to the outermost layer of the back surface of the material.

The layer containing the above-mentioned lubricant may be formed by coating a solution containing the lubricant,

dissolved in any suitable organic solvent, directly on a support or on a support previously coated with a backing layer or another layer or layers thereon, followed by drying the coated solution. If desired, the coating solution may contain a dispersion of the lubricant. Suitable solvents for the lubricant include: water; an alcohol, e.g., methanol, ethanol, isopropanol and butanol; a ketone, e.g., acetone, methyl ethyl ketone and cyclohexanone; an ester, e.g., methyl, ethyl, propyl or butyl ester of acetic acid, formic acid, oxalic acid, maleic acid or succinic acid; a hydrocarbon, e.g., hexane and cyclohexane; a halogenated hydrocarbon, e.g., methylene chloride, chloroform and carbon tetrachloride; an aromatic hydrocarbon, e.g., benzene, toluene, xylene, benzyl alcohol, benzoic acid and anisole; an amide, e.g., dimethylformamide, dimethylacetamide and n-methyl-pyrrolidone; an ether, e.g., diethyl ether, dioxane, tetrahydrofuran; an ether alcohol, e.g., propylene glycol monomethyl ether; as well as glycerin, diethylene glycol and dimethylsulfoxide.

A film-forming binder may be employed for coating the lubricant-containing layer. This binder may be a polymer, such as conventional thermoplastic resins, thermosetting resins, radiation-hardening resins, reactive resins and mixtures thereof. This binder may also be a hydrophilic binder, such as gelatin.

Suitable thermoplastic resin binders for the lubricant-containing layer include, for example, cellulose derivatives, such as cellulose triacetate, cellulose diacetate, cellulose acetate maleate, cellulose acetate phthalate, hydroxyacetylcellulose phthalate, cellulose long-chain alkyl ester, nitrocellulose, cellulose acetate propionate and cellulose acetate butyrate resins; vinyl copolymers such as vinyl chloride/vinyl acetate copolymer, copolymers of vinyl chloride, vinyl acetate and vinyl alcohol, maleic acid and/or acrylic acid, vinyl chloride-vinylidene chloride copolymer, vinyl chloride-acrylonitrile copolymer, and ethylene-vinyl acetate copolymer; rubber resins, such as acrylic resins, polyvinyl acetal resins, polyvinyl butyral resins, polyester polyurethane resins, polyether polyurethane resins, polycarbonate polyurea resins, polyester resins, polyether resins, polyamide resins, amino resins, styrene-butadiene resins, and butadiene-acrylonitrile resins; as well as silicone resins and fluorine-containing resins.

Suitable radiation-hardening resin binders for the lubricant-containing layer include those prepared by introducing carbon-carbon unsaturated bond-containing groups, which function as a radiation-hardening functional group, into the above-mentioned thermoplastic resins. Preferably, the radiation-hardening functional group is an acryloyl group or a methacryloyl group.

The above-mentioned binders for the lubricant-containing layer may include, polar groups, e.g., an epoxy group, a $CO_2M$ group, a OH group, a $NR_2$ group, a $NR_3M$ group, a $SO_3M$ group, a $OSO_3M$ group, a $PO_3M_2$ group, a $OPO_3M_2$ group, where M is a hydrogen atom, an alkali metal or ammonium, and when one polar group has more than one M group, each M group may be the same or different, and R is a hydrogen atom or an alkyl group.

The above-mentioned binders for the lubricant-containing layer may be used singularly or in combinations of one or more of the foregoing different types thereof. Conventional isocyanate crosslinking agents and/or radiation-hardening vinyl monomers may be added to these binders for hardening purposes.

Suitable hydrophilic binders for the lubricant-containing layer include those described in Research Disclosure No. 17643, page 26 and Research Disclosure No. 18716, page 651, and include, for example, water-soluble polymers, cellulose esters, latex polymers, and water-soluble polyesters. Suitable water-soluble polymers include, for example, gelatin, gelatin derivatives, casein, agar, sodium alginate, starch, polyvinyl alcohol, polyacrylic acid copolymers, and maleic anhydride copolymers. Suitable cellulose esters include, for example, carboxymethyl cellulose and hydroxyethyl cellulose. Suitable latex polymers include, for example, vinyl chloride-containing copolymers, vinylidene chloride-containing copolymers, acrylate-containing copolymers, vinyl acetate-containing copolymers, and butadiene-containing copolymers. More preferably, the binder is gelatin. The gelatin may be combined with gelatin derivatives.

It will understood that the foregoing described lubricant-containing layer may function as a protective layer for the photographic material of the present invention. A hardening agent may be used to harden this layer. Suitable hardening agents include, for example, aldehyde compounds, such as formaldehyde and glutaraldehyde; ketone compounds, such as diacetyl and cyclopentanedione; reactive halogen-containing compounds, such as bis(2-chloroethylurea) and 2-hydroxy-4,6-dichloro-1,3,5-triazine; divinylsulfone; 5-acetyl-1,3-diacryloylhexahydro-1,3,5-triazine; reactive olefin-containing compounds; N-hydroxymethylphthalimide; N-methylol compounds; isocyanates; aziridine compounds; acid derivatives; epoxy compounds; and halogenocarboxyaldehydes such as mucochloric acid. In addition, inorganic hardening agents such as chromium alum and zirconium sulfate may also be used in the present invention, as well as active carboxyl-containing hardening agents.

Drying of the above-described lubricant-containing layer coated on the photographic support of the present invention may be effected with air. Preferably, hot air is applied to the coated support or the coated support is passed through hot rolls. For example, the drying temperature may be at least 50°C, preferably at least 80°C, and most preferably at least 100°C. The whole drying zone may be heated, or a conveyer roll may be employed for heating and drying the coated support.

With regard to the sliding capacity of the lubricant-containing photographic material of the present invention, the material preferably has a static friction factor of up to 0.25. This factor is obtained by comparison to a test sample conditioned at a temperature of 25°C and a humidity of 60% relative humidity (RH) for 2 hours. The static friction factor is measured using a HEIDON-10 static friction factor tester using a 5 mmϕ stainless steel ball. The smaller the value

of the friction factor, the better the sliding property of the photographic material. Preferably, the photographic material of the present invention contains an emulsion layer on one surface of the film ("on emulsion surface") and by reducing the static friction factor, the friction between the emulsion surface of the film and the back surface of the film (when the film is rolled), the friction between the inner surface of a film cartridge and the surface of the film, and the friction between the film-take-out mouth of the film cartridge and the film may be reduced when the film is fed out from the film cartridge by the rotation of the spool of the cartridge. Thus, the driving torque required to feed the film from the cartridge is reduced and the film is protected from scratching.

The static friction factor of the photographic material in accordance with the invention, both before and after development of the material, is preferably up to 0.25, more preferably up to 0.20, most preferably up to 0.16, and most preferably up to 0.12. It is desired that the static friction factors of both the emulsion surface and the back surface of the film are small, but more preferably, the static friction factor of the back surface of the film is smaller than the static friction factor of the emulsion surface of the film.

In order to achieve a static friction factor of the developed film of the present invention of up to 0.25, it is preferred that the above-mentioned lubricant is incorporated into the emulsion layer and a back layer of the film. In particular, incorporation of the lubricant into both of the outermost layers of the film is preferred.

Incorporation of the lubricant into any of the layers or into either of the surfaces of the film may be effected by applying thereto a coating composition containing the lubricant to the film during preparation of the film. Alternatively, after the film has been formed, the lubricant may separately be applied thereto. If the lubricant is applied separately to the film, various methods may be employed, including liquid dipping, spraying, dip coating, bar coating and spin coating.

A matting agent may be added to the photographic material of the present invention in order to prevent the material from sticking. Any suitable matting agent may be employed in the present invention. The agent may be either an inorganic substance or an organic substance or may comprise a mixture of two or more substances.

The grains of the photographic material of the present invention remain in the material, even after development of the material. They do not dissolve in the processing solutions applied to the material. It is therefore desired that the grains do not contain a large amount of groups dissolving under an extreme hydrophilic, alkaline or acidic condition.

As mentioned above, the matting agent of the present invention may be an inorganic compound or an organic compound. For examples, the matting agent may be a fine powder of an inorganic compound, such as barium sulfate, manganese colloid, titanium dioxide, strontium barium sulfate, silicon dioxide or zirconium oxide. The matting agent may also be silicon dioxide, such as a synthetic silica obtained by a wet method or by gellation of silicic acid. The matting agent may also be titanium dioxide (rutile type or anatase type) formed from titanium slag and sulfuric acid. The matting agent may be obtained by grinding rough grains of an inorganic substance having a relatively large grain size of, for example, at least 20 μm, followed by classifying the ground grains (for example, by shaking filtration or pneumatic separation).

The matting agent may also be ground and classified grains of an organic polymer compound, such as polytetrafluoroethylene, cellulose acetate, polystyrene, polymethyl methacrylate, polypropylene methacrylate, polymethyl acrylate, polyethylene carbonate or starch.

The matting agent may also be high molecular weight polymer compounds produced by suspension polymerization, as well as spherical high molecular weight polymer compounds or inorganic compounds produced by spray drying or dispersion.

The matting agent may also be grains of a high molecular weight compound of a polymer prepared from one or more various polymerizable monomer compounds, the polymer being obtained by any suitable method. Preferably, the monomer compounds are acrylates, methacrylates, vinyl esters, styrenes and olefins.

The matting agent may also be grains containing fluorine or silicon atoms therein, such as those described in JP-A-62-14647, JP-A-62-17744 and JP-A-62-17743.

The matting agent preferably comprises grains having a mean grain size of from 0.05 to 8 μm. The amount of grains having a grain size of at least 10 μm in the agent is preferably up to 5%. More preferably, the mean grain size of the grains of the matting agent is from 0.1 to 5.0 μm and the amount of grains having a grain size of at least 7.0 μm in the agent is up to 5% or less. The amount of the matting agent in the photographic material of the present invention is preferably from 1 to 300 mg/m$^2$, more preferably from 2 to 250 mg/m$^2$.

The photographic layers of the photographic material in the present invention may contain therein a polymer latex, such as described in U.S. Patents 3,411,911 and 3,411,912 and JP-B-45-5331.

The silver halide emulsion layers and other hydrophilic colloid layers of the photographic material in the present invention may be hardened with various organic or inorganic hardening agents, used either alone or in combination.

As mentioned above, the photographic material of the present invention includes a magnetic recording layer, and therefore it is used in combination with a camera which is capable of reading information contained in the magnetic recording layer and writing information on the magnetic recording layer. Examples of suitable cameras which may be used with the photographic material of the present invention include those described in JP-A-2-135330 and JP-A-3-289639. These types of cameras are equipped with a magnetic recording device and may also be equipped with a motor for moving the photographic material therethrough.

Preferably, the silver halide color photographic material of the present invention is a color reversal film or a color negative film. More preferably, the color photographic material is a color negative film for general use.

A suitable, general use color negative film which may be used in the present invention will now be described.

The photographic material of the present invention may be any suitable photographic material, provided that it has at least one blue-sensitive silver halide emulsion layer, at least one green-sensitive silver halide emulsion layer and at least one red-sensitive silver halide emulsion layer on a support. In the material, the number of silver halide emulsion layers and light-insensitive layers as well as the order of the layers on the support may be any suitable number and order. For example, the silver halide color photographic material may include numerous light-sensitive layer units, each unit including numerous silver halide emulsion layers, each layer having substantially the same color-sensitivity but having a different degree of sensitivity. The light-sensitive layers each has a color-sensitivity to anyone of blue light, green light and red light. In conventional multi-layer silver halide color photographic material, in general, the order of the light-sensitive layer units formed on the support is the following: a red-sensitive layer unit, a green-sensitive layer unit and a blue-sensitive layer unit. If desired, however, this order may be reversed. As still another embodiment, a different light-sensitive layer may be sandwiched between the same color-sensitive layers.

One preferred form of the photographic material of the present invention is a roll film into which signals may easily be inputted on the transparent magnetic recording layer thereof during movement of the film in a camera or printer. In such a roll film, the area for one exposure is preferably from 350 $mm^2$ to 1200 $m^2$, and the effective space for magnetic information recording is preferably at least 15% of the area of one exposure. Concretely, the number of perforations (i.e., perforations 7 shown in Fig. 2) per one picture plane is desired to be smaller than that of 135 format. Especially preferably, the number of perforations per one exposure is 4 or less.

Informations may be inputted optically into the magnetic information recordable space, which is the magnetic recording layer, with a light emitting substance or device, such as a LED. Combined inputting of both magnetic information and optical information into the space is also preferred. The magnetic recording format is desired to follow the system illustrated in International Patent Application (Laid-Open) No. 90-4205.

The photographic material of the present invention may be used as a rolled film, and is preferably housed in a cartridge. The most popular cartridge is the current 135 format patrone. Other cartridges may be used to house the photographic material of the present invention such as the cartridges disclosed in Japanese Utility Model Application (Laid-Open) No. 58-67329, JP-A-58-181035, JP-A-58-182634, Japanese Utility Model Application (Laid-Open) No. 58-195236, U.S. Patent 4,221,479, Japanese Patent Application Nos. 63-183344 and 1-21862, JP-A-1-231045, JP-A-2-170156, JP-A-2-205843, JP-A-2-210346, JP-A-2-199451, JP-A-2-201441, JP-A-2-214853, JP-A-2-211443, JP-A-2-264248, JP-A-3-37646, JP-A-3-37645, JP-A-3-124564, U.S. Patents 4,846,418, 4,848,693, 4,832,275. A cartridge having no leader of film (i.e., the top portion of the film) and having a device for controlling the situation of the cartridge in a camera, as described in Japanese Patent Application No. 1-214896, is especially preferred.

The cartridge which may be used to house the photographic film of the present invention is preferably a synthetic plastic.

A plasticizer may be used for shaping a synthetic plastic into a cartridge which may be used in the present invention. Examples of a suitable plasticizer include trioctyl phosphate, tributyl phosphate, dibutyl phthalate, diethyl sebacate, methyl amyl ketone, nitrobenzene, γ-valerolactone, di-n-octyl succinate, bromonaphthalene and butyl palmitate.

Examples of suitable plastic materials include polystyrene, polyethylene, polypropylene, polymonochlorotrifluoroethylene, vinylidene chloride resin, vinyl chloride resin, vinyl chloride-vinyl acetate copolymer resin, acrylonitrile-butadiene-styrene copolymer resin, methylmethacrylic resin, vinyl-formal resin, vinyl-butyral resin, polyethylene terephthalate, teflon, nylon, phenolic resin, and melamine resin.

Preferably, the plastic material is polystyrene, polyethylene or polypropylene.

The cartridge of the present invention may contain various antistatic agents. Any suitable antistatic agent may be used in the present invention. Preferably, the antistatic agent is carbon black; metal oxide grains; nonionic, anionic, cationic or betainic surfactants; and nonionic, anionic, cationic or betainic polymers. Cartridges containing such antistatic agents are described in JP-A-1-312537 and JP-A-1-213538. Preferably, the antistatic agent has an electric resistance of up to $10^{12}$ Ω at 25°C and 10% RH.

Preferably, the cartridges used in the present invention are made from plastics into which carbon black or pigments have been kneaded for imparting light-shieldability thereto.

The cartridge which may be used in the present invention may be any suitable size. Preferably, the 25 mm diameter of a conventional cartridge may be reduced to up to 22 mm, more preferably from 14 mm to 20 mm, whereby such a small-sized cartridge may be housed in a small-sized camera. In a conventional cartridge, the top of the spool includes a projection which engages a film driving part of a camera. Such a projection, however, cannot be used in a small-sized camera. Therefore, elimination of the projection is desired, but that results in reducing the capacity of a conventional cartridge, which is about 35 $cm^3$. The capacity of the cartridge which is used in the present invention is preferably

up to 30 $cm^3$, more preferably up to 25 $cm^3$, and most preferably up to 20 $cm^3$. The weight of the plastic of the cartridge and the cartridge case is preferably from 1 g to 25 g, more preferably from 5 g to 15 g.

The ratio of the net capacity of cartridge case to the plastics of cartridge and cartridge case is preferably from 4:1 to 0.7:1, more preferably from 3:1 to 1:1.

Where the color photographic material of the present invention is built into a cartridge, the total weight of the plastic or plastics forming the cartridge and the cartridge case is preferably from 1 g to 25 g, more preferably from 5 g to 15 g.

The present invention will be explained in more detail by way of the following examples. Examples 1 to 6 demonstrate the properties of the magnetic layer used in the present invention.

EXAMPLE 1

110 g of acicular magnetic grains of Co-$\gamma$-$Fe_2O_3$ (length in the short axis 0.03 µm; length in the long axis 0.14 µm; BET surface area 42 $m^2$/g; coercive force 830 Oe; magnetization 62 emu/g) and 22 g of water were well kneaded together with the coupling agent used in the present invention or the comparative compound as indicated in Table 1 below, in an open kneader for 3 hours. The thus roughly dispersed viscous solution was dried at 70°C for one full day so as to remove water therefrom, and then was heated at 110°C for one hour to give surface-treated magnetic grains (Samples Nos. 1-2 to 1-23 in Table 1).

23.5 g of diacetyl cellulose, 230 g of methyl ethyl ketone, 230 g of cyclohexanone, 38 g of acetone and 38 g of methanol were added to 1.85 g of the surface-treated magnetic grains, which were then finely dispersed in a sand mill (1/4 G (gallon)) at 200 rpm for 4 hours. The viscosity of the thus-obtained solution was about 80 mPa·s (cp). Coating of the solution on the support mentioned below was carried out with a bar coater. Immediately after dispersion of the solution and after allowed to stand for 48 hours at 25°C, 4.7 g of a hardening agent [$C_2H_5C(CH_2OCONH$-$C_6H_5(CH_3)NCO)_3$], 10 mg/$m^2$ of a matting agent (silica grains having a grain size of 0.3 µm) and 10 mg/$m^2$ of an abrasive (aluminium oxide grains having a grain size of 0.5 µm) were added to each of the dispersed solutions. The dispersed solution was then coated in an amount of 0.09 g/$m^2$ in terms of the magnetic grains on a polyethylene naphthalate support with a bar coater. The polyethylene naphthalate support had a thickness of 85 µm. The support was previously heat-treated at 115°C for 24 hours by winding it around a stainless steel roll having a diameter of 30 cm and then subjecting it to corona discharging treatment, glow treatment and flame treatment with propane gas. A subbing layer of vinylidene chloride/polyurethane/SBR (Styrene-Butadiene Rubber), having a thickness of 0.1 µm, was coated on the support, prior to formation of the magnetic layer. Drying of the magnetic layer was carried out at 115°C for 6 minutes in a drying zone where the rollers and other conveyer devices all had a temperature of 115°C.

In preparing Sample No. 1-21, the above-mentioned substances were mixed without using an open kneader. In preparing Sample No. 1-22, a lubricant comprising 0.093 g of $C_{15}H_{31}COOC_{40}H_{81}$ and 0.093 g of dimethylsiloxane was added to the coating solution. In preparing Sample No. 1-23, a matting agent comprising 0.19 g of silica grains (having a mean grain size of 0.3 µm) was added to the same.

The samples thus prepared as well as the coating solutions themselves were tested with respect to the following matters.

The comparative compounds used herein were as follows:

Comparative Compound (a): $C_9H_{19}$-$C_6H_4$-$(OCH_2CH_2O)_{10}H$
Comparative Compound (b): $C_{16}H_{33}OSO_3Na$
Comparative Compound (c): Polyacrylic acid

(i) Evaluation of the Stability of the Coating Solutions:

A part of a coating solution sample to be tested was applied to an electrophoretic light-scattering photometer to measure the grain size of the grains in the sample. A fresh coating solution (immediately after its preparation) and a coating solution left for 48 hours at 25°C after its preparation were tested.

(ii) Evaluation of the Transparency (Haze) of a Coated Sample:

The haze of the coated film sample was measured with a haze meter. The smaller the value measured, the higher the transparency.

(iii) Evaluation of the Magnetic Characteristics of a Coated Sample:

A recording signal having a density of 500 bpi was recorded onto the recording layer of a film sample, using an input-output head having a track width of 1.5 mm, a head gap of 5 µm and a turn number of 1000, at a feeding speed

of 30 mm/s . Using the same head, the recorded signal was read out at the same feeding speed, whereupon the C/N ratio was obtained. The larger the C/N ratio, the better the magnetic characteristics of the tested sample.

The results obtained are shown in Table 1 below.

Table 1

| Sample No. | Coupling Agent Added | Amount of Coupling Agent Added (wt% to magnetic grains) | Stability of Coating Solution | | Transparency (Haze Degree) | | Magnetic Characteristic | |
|---|---|---|---|---|---|---|---|---|
| | | | fresh sample (immediately after preparation) | after 48 hours | fresh sample (immediately after preparation) | after 48 hours | fresh sample (immediately after preparation) | after 48 hours |
| 1-1 (control) | — | — | 0.26 µm | 18.5 µm | 6.2% | 19.6% | 28 dB | 20 dB |
| 1-2 | (I)-3 | 25 | 0.15 | 0.16 | 3.5 | 3.7 | 29 | 29 |
| 1-3 | (I)-5 | 25 | 0.15 | 0.16 | 3.6 | 3.6 | 29 | 29 |
| 1-4 | (I)-7 | 20 | 0.16 | 0.17 | 3.7 | 3.7 | 29 | 29 |
| 1-5 | (I)-9 | 20 | 0.15 | 0.16 | 3.6 | 3.7 | 31 | 30 |
| 1-6 | (I)-12 | 20 | 0.16 | 0.17 | 3.5 | 3.6 | 30 | 30 |
| 1-7 | (I)-16 | 35 | 0.16 | 0.17 | 3.6 | 3.7 | 29 | 29 |
| 1-8 | (I)-18 | 35 | 0.15 | 0.16 | 3.5 | 3.7 | 29 | 29 |
| 1-9 | (I)-19 | 15 | 0.15 | 0.16 | 3.7 | 3.8 | 30 | 29 |
| 1-10 | (I)-20 | 2.5 | 0.15 | 0.17 | 3.8 | 3.9 | 29 | 29 |
| 1-11 | (I)-20 | 15 | 0.17 | 0.17 | 3.8 | 4.0 | 29 | 29 |

Table 1 (cont'd)

| Sample No. | Coupling Agent Added | Amount of Coupling Agent Added (wt% to magnetic grains) | Stability of Coating Solution | | Transparency (Haze Degree) | | Magnetic Characteristic | |
|---|---|---|---|---|---|---|---|---|
| | | | fresh sample (immediately after preparation) | after 48 hours | fresh sample (immediately after preparation) | after 48 hours | fresh sample (immediately after preparation) | after 48 hours |
| 1-12 | (I)-20 | 25 | 0.16 | 0.16 | 3.7 | 4.0 | 30 | 29 |
| 1-13 | (I)-20 | 35 | 0.15 | 0.16 | 3.6 | 3.9 | 31 | 30 |
| 1-14 | (I)-20 | 50 | 0.16 | 0.17 | 3.8 | 4.1 | 30 | 30 |
| 1-15 | (I)-20 | 190 | 0.17 | 0.18 | 4.2 | 4.1 | 29 | 29 |
| 1-16 (comparative sample) | (I)-20 | 0.5 | 0.25 | 15.6 | 5.9 | 20.8 | 25 | 21 |
| 1-17 (comparative sample) | (I)-20 | 210 | 0.19 | 0.68 | 4.0 | 9.8 | 26 | 24 |
| 1-18 (comparative sample) | comparative compound (a) | 25 | 0.29 | 30.6 | 5.2 | 23.2 | 24 | 18 |
| 1-19 (comparative sample) | comparative compound (b) | 25 | 0.28 | 28.1 | 5.6 | 19.6 | 24 | 19 |
| 1-20 (comparative sample) | comparative compound (c) | 25 | 0.31 | 14.2 | 4.5 | 21.3 | 25 | 20 |
| 1-21 | (I)-20 | 25 | 0.19 | 0.20 | 4.1 | 4.3 | 28 | 27 |
| 1-22 | (I)-20 | 25 | 0.15 | 0.16 | 3.7 | 3.8 | 32 | 32 |
| 1-23 | (I)-20 | 25 | 0.16 | 0.16 | 4.0 | 4.1 | 32 | 32 |

As is apparent from the results of Table 1 above, the coating solution according to the present invention and the coated film samples Nos. 1-2 to 1-15, all of which contained acicular Co-γ-$Fe_2O_3$ grains surface-treated with the silane coupling agent of formula (I) according to the present invention, had excellent coating solution stability, transparency and magnetic characteristic. In contrast, the stability of the coating solution of the control sample No. 1-1 in which the magnetic grains were not coated with any silane coupling agent, the comparative sample No. 1-16 in which the magnetic grains were coated with a too small amount of the coupling agent and the comparative sample No. 1-17 in which the magnetic grains were coated with a too large amount of the coupling agent was insufficient; and the transparency and the magnetic characteristic of the aged samples Nos. 1-1, 1-16 and 1-17 were extremely bad. The stability of the coating solutions of the comparative samples Nos. 1-18 to 1-20 in which the magnetic grains were coated with the comparative compound was poor; and the transparency and the magnetic characteristic of the aged samples Nos. 1-18 to 1-20 were extremely poor.

The surface properties of each of the samples Nos. 1-2 to 1-15 were good; but those of the surface of each of the control sample No. 1-1 and the comparative sample Nos. 1-16 and 1-20 was extremely rough and poor after they were aged for 48 hours.

In preparing the sample No. 1-21, the components were kneaded without using an open kneader. Therefore, the coating solution stability, transparency and magnetic characteristic of the sample No. 1-21 were somewhat inferior to those of the other samples as prepared using an open kneader, but the sample was satisfactory in use. From the above-mentioned results, it is understood that the magnetic material to be in the magnetic recording layer of the photographic material of the present invention is preferably kneaded in an open kneader, so as to increase the stability of the coating solution, as well as the transparency and magnetic characteristics of the magnetic layer. Sample No. 1-22 contained a lubricant in the magnetic recording layer, which had a static friction factor of 0.1 (as measured by a paper-clipping method). The coating solution stability, transparency and magnetic characteristics of sample No. 1-22 were good. A sample equivalent to sample No. 1-22 but not containing a lubricant, had a static friction factor of from 0.4 to 0.5. This suggests that the photographic material of the present invention may be further improved by incorporation of a lubricant therein.

Sample No. 1-23 contained a matting agent in the magnetic recording layer. Though the transparency of sample No. 1-23 was somewhat reduced, the magnetic characteristics thereof were much improved. This also suggests that the photographic material of the present invention may be much more improved by incorporation of a matting agent therein.

From the above-mentioned results, it is understood that the magnetic grains as surface-treated with the silane coupling agent of formula (I) according to the present invention have excellent dispersibility and that the magnetic material containing such grains provides a magnetic recording layer having excellent transparency and magnetic characteristics.

## EXAMPLE 2

Samples Nos. 2-1 to 2-17 were prepared in the same manner as in preparation of the samples of Example 1, except that the titanium coupling agent and the amount thereof as shown in Table 2 below was used and that cubic Co-containing magnetite grains having a grain size of 0.15 μm (as the length of one edge of the cube), a coercive force of 850 Oe and a magnetization of 80 emu/g were used.

The coating solutions and the coated film samples were tested in the same manner as in Example 1. The results obtained are shown in Table 2 below.

Table 2

| Sample No. | Coupling Agent Added | Amount of Coupling Agent Added (wt% to magnetic grains) | Stability of Coating Solution | | Transparency (Haze Degree) | | Magnetic Characteristic | |
|---|---|---|---|---|---|---|---|---|
| | | | fresh sample (immediately after preparation) | after 48 hours | fresh sample (immediately after preparation) | after 48 hours | fresh sample (immediately after preparation) | after 48 hours |
| 2-1 (control) | — | — | 0.31 μm | 21.3 μm | 2.8% | 24.8% | 25 dB | 19 dB |
| 2-2 | (II)-3 | 25 | 0.19 | 0.24 | 2.6 | 3.0 | 26 | 26 |
| 2-3 | (II)-5 | 25 | 0.18 | 0.21 | 2.5 | 3.2 | 26 | 26 |
| 2-4 | (II)-6 | 25 | 0.20 | 0.22 | 2.7 | 3.1 | 27 | 27 |
| 2-5 | (II)-8 | 25 | 0.22 | 0.26 | 2.6 | 3.2 | 26 | 26 |
| 2-6 | (II)-13 | 25 | 0.23 | 0.24 | 2.8 | 2.9 | 27 | 27 |
| 2-7 | (II)-14 | 35 | 0.21 | 0.23 | 2.8 | 3.1 | 27 | 26 |
| 2-8 | (II)-16 | 35 | 0.22 | 0.25 | 2.6 | 3.0 | 27 | 26 |
| 2-9 | (II)-2 | 25 | 0.25 | 0.28 | 2.7 | 3.0 | 27 | 25 |
| 2-10 | (II)-2 | 3.0 | 0.26 | 0.29 | 2.7 | 3.0 | 26 | 26 |

Table 2 (cont'd)

| Sample No. | Coupling Agent Added | Amount of Coupling Agent Added (wt% to magnetic grains) | Stability of Coating Solution | | Transparency (Haze Degree) | | Magnetic Characteristic | |
|---|---|---|---|---|---|---|---|---|
| | | | fresh sample (immediately after preparation) | after 48 hours | fresh sample (immediately after preparation) | after 48 hours | fresh sample (immediately after preparation) | after 48 hours |
| 2-11 | (II)-2 | 45 | 0.20 | 0.23 | 2.7 | 3.1 | 27 | 26 |
| 2-12 | (II)-2 | 190 | 0.25 | 0.28 | 3.2 | 3.4 | 26 | 25 |
| 2-13 (comparative sample) | (II)-2 | 0.5 | 0.32 | 16.3 | 4.2 | 25.1 | 25 | 25 |
| 2-14 (comparative sample) | (II)-2 | 210 | 0.29 | 9.8 | 4.8 | 11.6 | 25 | 17 |
| 2-15 (comparative sample) | comparative compound (a) | 73 | 0.32 | 13.2 | 4.9 | 14.3 | 26 | 16 |
| 2-16 (comparative sample) | comparative compound (b) | 1.5 | 0.34 | 11.6 | 5.1 | 10.9 | 25 | 15 |
| 2-17 (comparative sample) | comparative compound (c) | 79 | 0.31 | 21.8 | 5.4 | 21.3 | 25 | 14 |

As is apparent from the results in Table 2 above, samples Nos. 2-2 to 2-12, which contained cubic Co-containing magnetite grains surface-treated with the titanium coupling agent according to the present invention, had excellent solution stability, transparency and magnetic characteristics. In addition, the surface properties of the coated surface of each of the samples were good.

In contrast, control sample No. 2-1, comparative sample No. 2-13 in which the magnetic grains were surface-treated with a too small amount of the titanium coupling agent, comparative sample No. 2-14 in which the magnetic grains were surface-treated with a too large amount of the titanium coupling agent and comparative sample Nos. 2-15 to 2-17 in which the magnetic grains were surface-treated with the comparative compound had poor solution stability and had extremely bad transparency and magnetic characteristics.

EXAMPLE 3

Samples Nos. 3-1 to 3-20 were prepared in the same manner as in preparation of the samples of Example 1, except that acicular Co-containing magnetite grains having a length in the long axis of 0.15 μm, a length in the short axis of 0.04 μm, a coercive force of 830 Oe, a magnetization of 78 emu/g and a surface area of 48 $m^2/g$ were used. (Samples corresponding to the sample Nos. 1-21 to 1-23 were not prepared.)

The coating solutions and the coated film samples were tested in the same manner as in Example 1. The results obtained are shown in Table 3 below.

Table 3

| Sample No. | Coupling Agent Added | Amount of Coupling Agent Added (wt% to magnetic grains) | Stability of Coating Solution | | Transparency (Haze Degree) | | Magnetic Characteristic | |
|---|---|---|---|---|---|---|---|---|
| | | | fresh sample (immediately after preparation) | after 48 hours | fresh sample (immediately after preparation) | after 48 hours | fresh sample (immediately after preparation) | after 48 hours |
| 3-1 (control) | — | — | 0.19 μm | 14.7 μm | 4.6% | 16.5% | 29 dB | 29 dB |
| 3-2 | (I)-3 | 25 | 0.18 | 0.21 | 3.4 | 3.9 | 28 | 29 |
| 3-3 | (I)-5 | 25 | 0.17 | 0.20 | 3.1 | 3.5 | 29 | 29 |
| 3-4 | (I)-7 | 20 | 0.18 | 0.19 | 3.8 | 3.9 | 30 | 29 |
| 3-5 | (I)-9 | 20 | 0.16 | 0.18 | 3.5 | 4.0 | 30 | 29 |
| 3-6 | (I)-12 | 20 | 0.18 | 0.22 | 3.7 | 4.2 | 29 | 29 |
| 3-7 | (I)-16 | 35 | 0.19 | 0.21 | 3.2 | 4.0 | 29 | 30 |
| 3-8 | (I)-18 | 35 | 0.18 | 0.23 | 3.3 | 3.8 | 29 | 30 |
| 3-9 | (I)-19 | 15 | 0.17 | 0.20 | 3.8 | 4.5 | 29 | 29 |
| 3-10 | (I)-20 | 2.5 | 0.21 | 0.25 | 4.8 | 5.3 | 29 | 30 |
| 3-11 | (I)-20 | 15 | 0.18 | 0.22 | 3.9 | 4.5 | 30 | 29 |

Table 3 (cont'd)

| Sample No. | Coupling Agent Added | Amount of Coupling Agent Added (wt% to magnetic grains) | Stability of Coating Solution | | Transparency (Haze Degree) | | Magnetic Characteristic | |
|---|---|---|---|---|---|---|---|---|
| | | | fresh sample (immediately after preparation) | after 48 hours | fresh sample (immediately after preparation) | after 48 hours | fresh sample (immediately after preparation) | after 48 hours |
| 3-12 | (I)-20 | 25 | 0.17 | 0.19 | 3.6 | 4.1 | 30 | 29 |
| 3-13 | (I)-20 | 35 | 0.19 | 0.18 | 3.8 | 4.3 | 30 | 29 |
| 3-14 | (I)-20 | 50 | 0.20 | 0.23 | 4.2 | 4.9 | 28 | 28 |
| 3-15 (sample of the invention) | (I)-20 | 190 | 0.22 | 0.25 | 4.9 | 5.6 | 28 | 27 |
| 3-16 (comparative sample) | (I)-20 | 0.5 | 0.29 | 31.6 | 6.2 | 13.5 | 28 | 21 |
| 3-17 (comparative sample) | (I)-20 | 210 | 0.27 | 1.58 | 5.1 | 9.8 | 28 | 24 |
| 3-18 (comparative sample) | comparative compound (a) | 25 | 0.33 | 25.1 | 4.8 | 25.8 | 28 | 19 |
| 3-19 (comparative sample) | comparative compound (b) | 25 | 0.22 | 20.3 | 5.1 | 16.4 | 29 | 20 |
| 3-20 (comparative sample) | comparative compound (c) | 25 | 0.20 | 12.9 | 5.3 | 17.2 | 28 | 21 |

As is apparent from the results of Table 3 above, the coating solutions and the coated samples each containing the acicular Co-containing magnetite grains surface-treated with the silane coupling agent according to the present invention had excellent solution stability, transparency and magnetic characteristics. In contrast, control sample No. 3-1 containing the magnetic grains coated with no silane coupling agent, comparative sample No. 3-16 containing the magnetic grains coated with a too small amount of the silane coupling agent, comparative sample No. 3-17 containing the magnetic grains coated with a too large amount of the silane coupling agent and comparative samples Nos. 3-18 to 3-20 each containing the magnetic grains coated with the comparative compound had poor solution stability and had bad transparency and magnetic characteristics. From the foregoing, it is apparent that the effect of the present invention including surface-treatment of the magnetic grains with the particular silane coupling agent according to the present invention is remarkable.

EXAMPLE 4

Samples Nos. 4-1 to 4-21 were prepared in the same manner as in preparation of the samples Nos. 1-1 to 1-21, respectively, of Example 1, except that a condensate film of terephthalic acid/naphthalene-dicarboxylic acid/adipic acid/5-sulfoisophthalic acid/ethylene glycol (38/50/5.3/ 6.7/100) having a thickness of 85 μm was used in place of the polyethylene naphthalate support film. (Samples corresponding to sample Nos. 1-22 to 1-23 were not prepared.)

Sample Nos. 4-2 to 4-15 and No. 4-21 had excellent transparency and magnetic characteristics, while control sample No. 4-1 and comparative samples Nos. 4-16 and 1-17, as aged for 48 hours, had extremely bad transparency and magnetic characteristics.

EXAMPLE 5

Sample Nos. 5-1 to 5-23 were prepared in the same manner as in preparation of sample Nos. 1-1 to 1-23, respectively, of Example 1, except that a polyethylene terephthalate film support having a thickness of 90 μm was used in place of the polyethylene naphthalate support film.

Sample Nos. 5-2 to 5-15 and 5-21 to 5-23 had excellent transparency and magnetic characteristics, while control sample No. 5-1 and comparative sample Nos. 5-16 to 5-20 as aged for 48 hours had extremely bad transparency and magnetic characteristics.

Sample No. 5-2 was wound around a spool having a core diameter of 7 mm and heated at 80°C for 2 hours, whereupon the sample curled extremely strong and the error of the magnetic recording characteristics in the tip of the sample near to the core of the spool was extremely great. The thus strongly curled sample was wound in reverse around a stainless steel roller (having a diameter of 2 cm) heated to 110°C and was maintained thereon for 3 seconds. After the heat treatment, the sample was well uncurled and the uncurled sample again had extremely excellent magnetic characteristics. The support was uncurled by heat treatment at a temperature higher than the Tg of polyethylene naphthalate. The uncurling heat treatment is extremely effective for greatly improving the capacity of the magnetic recording photographic material of the present invention.

EXAMPLE 6

Sample Nos. 6-1 to 6-20 were prepared in the same manner as in sample Nos. 3-1 to 3-20, respectively, of Example 3, except that a cellulose triacetate film support having a thickness of 115 μm was used in place of the polyethylene naphthalate support film.

Sample Nos. 6-2 to 6-15 had excellent transparency and magnetic characteristics, while control sample No. 6-1 and comparative sample Nos. 6-16 to 6-20, as aged for 48 hours, had extremely bad transparency and magnetic characteristics.

EXAMPLE 7

The following backing layers were coated over the magnetic recording layer of each of the samples prepared in Example 1. Photographic film samples were then prepared, developed and evaluated as discussed below. (Sample Nos. 1-21 to 1-23 were omitted.) Sample No. 7-24 was prepared, without using an antistatic agent composed of $SnO_2$/$Sb_2O_3$/$SiO_2$ and a cationic polymer condensate composed of 1,4-(bisdimethylamino)benzene and 1,4-(bisdibromo) benzene, as mentioned below.

7-1) Composition of First Backing Layer:

| | |
|---|---|
| Cellulose Triacetate | 0.1 g/$m^2$ |
| Ethylene Glycol | 0.08 g/$m^2$ |
| $SnO_2/Sb_2O_3/SiO_2$ (molar ratio of 90/10/1; mean primary grain size of 0.01 μm; mean secondary grain size of 0.10 μm) | 0.1 g/$m^2$ |
| Cationic Polymer Condensate of 1,4-(Bisdimethylamino)benzene and 1,4-(Bisdibromo)benzene | 0.1 g/$m^2$ |
| 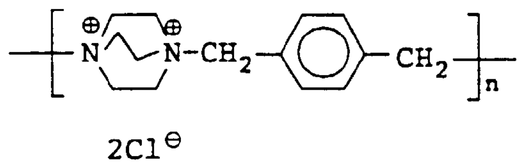 | 0.04 g/$m^2$ |
| 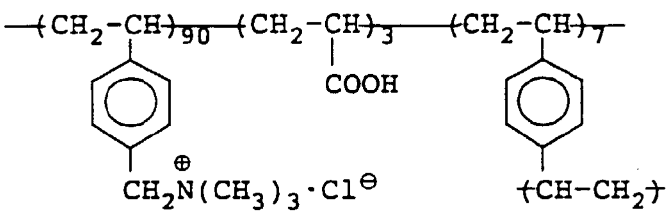 | 0.05 g/$m^2$ |

7-2) Composition of Second Backing Layer:

| | |
|---|---|
| Diacetyl Cellulose | 0.2 $g/m^2$ |
| $C_2H_5C(CH_2OCONHC_6H_3(CH_3)NCO)_3$ | 0.05 $g/m^2$ |
| Toluene Diisocyanate | 0.01 $g/m^2$ |
| Colloidal Silica (as an aerosil, with mean grain size of 0.02 μm) | 0.02 $g/m^2$ |
| $C_{15}H_{31}COOC_{40}H_{81}$ (as a dispersion, with mean grain size of 0.01 μm) | 0.02 $g/m^2$ |
| $C_{21}H_{43}COO(CH_2CH_2O)_3-COC_9H_{19}$ | 0.01 $g/m^2$ |
| $C_{17}H_{35}COOCH_2CH_2C_8F_{17}$ | 0.005 $g/m^2$ |
| $C_8F_{17}SO_2N(CH_3)(CH_2CH_2O)_6H$ | 0.005 $g/m^2$ |
| Polydimethylsiloxane | 0.003 $g/m^2$ |
| Liquid Paraffin | 0.003 $g/m^2$ |
| Poly(vinylidene difluoride/vinylidene tetrafluoride) (molar ratio of 9/1) | 0.01 $g/m^2$ |
| Poly(methyl methacrylate/divinylbenzene) (molar ratio of 9/1; mean grain size of 1.0 μm) | 0.03 $g/m^2$ |
| Silica (mean grain size of 0.3 μm) | 0.005 $g/m^2$ |

A mixture of acetone, methanol, cyclohexanone, methyl ethyl ketone, butanol, xylene, propylene glycol monomethyl ether and methylene chloride was used as the coating solvent.

7-3) Preparation of Photographic Film Samples:

The surface opposite to the backing layer formed as discussed above was subjected to flame treatment, corona discharge treatment, glow discharge treatment and UV treatment in this order, and plural layers having the compositions mentioned below were coated on the surface to prepare color negative photographic film samples.

Compositions of Photographic Layers:

The same photographic layers as those described in Example 1 of JP-A-2-93641 were formed on the surface of each of sample Nos. 7-1 to 7-24 to prepare photographic film samples.

Briefly, the photographic film samples each had an antihalation layer as a first layer, an interlayer as a second layer, light-sensitive layers as the third to thirteenth layers, and protective-layers as the fourteenth and fifteenth layers.

7-4) Development of Photographic Film Samples:

The photographic film samples thus-prepared were developed, if desired for their evaluation, in accordance with the process mentioned below.

The developing machine used was a cinematic auto-developing machine ("FNCP-900 Model", tradename).

The process for development of the samples comprised the following steps:

| | |
|---|---|
| Color Development | 3 min 15 s |
| Bleaching | 6 min 30 s |
| Rinsing | 2 min 10 s |
| Fixation | 4 min 20 s |
| Rinsing | 3 min 15 s |
| Stabilization | 1 min 5 s |

The compositions of the processing solutions used in the foregoing steps are mentioned below.

Color Developer:

| | |
|---|---|
| Diethylenetriaminepentaacetic Acid | 1.0 g |
| 1-Hydroxyethylidene-1,1-diphosphonic Acid | 2.0 g |
| Sodium Sulfite | 4.0 g |
| Potassium Carbonate | 30.0 g |
| Potassium Bromide | 1.4 g |
| Potassium Iodide | 1.3 g |
| Hydroxylamine Sulfate | 2.4 g |
| 4-(N-ethyl-N-β-hydroxyethylamino)-2-methylaniline Sulfate | 4.5 g |
| Water to make | 1.0 liter |
| | pH 10.0 |

Bleaching Solution:

| | |
|---|---|
| Ammonium Ethylenediaminetetraacetate/Ferric Complex Salt | 100.0 g |
| Disodium Ethylenediaminetetraacetate | 10.0 g |
| Ammonium Bromide | 150.0 g |
| Ammonium Nitrate | 10.0 g |
| Water to make | 1.0 liter |
| | pH 6.0 |

Fixing Solution:

| | |
|---|---|
| Disodium Ethylenediaminetetraacetate | 1.0 g |
| Sodium Sulfite | 4.0 g |
| Ammonium Thiosulfate Aqueous Solution (70 wt%) | 175.0 ml |
| Sodium Bisulfite | 4.6 g |
| Water to make | 1.0 liter |
| | pH 6.6 |

Stabilizing Solution:

| | |
|---|---|
| Formalin (40 wt%) | 2.0 ml |
| Polyoxyethylene P-monononylphenyl Ether (mean polymerization degree 10) | 0.3 g |
| Water to make | 1.0 liter |

The capacity of the samples thus processed was evaluated in the manner mentioned below.

7-5) Evaluation of Output Errors in Magnetic Recording:

Magnetic signals were inputted into the developed photographic material sample from the back surface thereof in accordance with the signal inputting system disclosed in International Patent (Laid-Open) No. 90-04205, and the inputted signals were outputted from the sample repeatedly 500 times whereupon the number of the output errors was counted.

The output operation was effected at 25°C and 30% RH.

The magnetic recording capacity of sample Nos. 7-1 to 7-20 and 7-24 was tested and evaluated in the manner as mentioned above, and the results obtained are shown in Table 4 below.

Table 4

| Sample No. | Number of Output Errors in Magnetic Recording | | | |
|---|---|---|---|---|
| | Before Development | | After Development | |
| | fresh sample (immediately after preparation) | after 48 hours | fresh sample (immediately after preparation) | after 48 hours |
| 7-1 (control) | 5 | 153 | 3 | 205 |
| 7-2 (sample of the invention) | 2 | 1 | 1 | 2 |
| 7-3 (sample of the invention) | 0 | 1 | 1 | 3 |
| 7-4 (sample of the invention) | 2 | 2 | 1 | 0 |
| 7-5 (sample of the invention) | 3 | 0 | 2 | 1 |
| 7-6 (sample of the invention) | 1 | 1 | 0 | 2 |
| 7-7 (sample of the invention) | 0 | 1 | 3 | 2 |
| 7-8 (sample of the invention) | 0 | 2 | 4 | 3 |
| 7-9 (sample of the invention) | 2 | 2 | 2 | 2 |
| 7-10 (sample of the invention) | 1 | 3 | 0 | 4 |
| 7-11 (sample of the invention) | 4 | 0 | 0 | 5 |
| 7-12 (sample of the invention) | 5 | 1 | 0 | 3 |
| 7-13 (sample of the invention) | 1 | 1 | 2 | 3 |
| 7-14 (sample of the invention) | 4 | 7 | 5 | 9 |
| 7-15 (sample of the invention) | 5 | 6 | 7 | 8 |
| 7-16 (comparative sample) | 5 | 106 | 4 | 85 |
| 7-17 (comparative sample) | 5 | 67 | 5 | 72 |

Table 4 (cont'd)

| Sample No. | Number of Output Errors in Magnetic Recording | | | |
|---|---|---|---|---|
| | Before Development | | After Development | |
| | fresh sample (immediately after preparation) | after 48 hours | fresh sample (immediately after preparation) | after 48 hours |
| 7-18 (comparative sample) | 4 | 91 | 8 | 102 |
| 7-19 (comparative sample) | 7 | 139 | 7 | 146 |
| 7-20 (comparative sample) | 6 | 114 | 5 | 84 |
| 7-24 (sample of the invention) | 10 | 13 | 8 | 12 |

As is apparent from the results in Table 4 above, the photographic film samples Nos. 7-2 to 7-15 of the present invention were excellent, with which the number of the output errors in magnetic recording and reproduction was small. In contrast, the magnetic characteristics of aged control sample No. 7-1, aged comparative sample No. 7-16 not having the inorganic compound according to the present invention on its surface and the aged comparative sample No. 7-17 having an insufficiently small amount of the magnetic grains were bad, as the number of the output errors in magnetic recording and reproduction was large.

Magnetic recording of the film samples of the present invention was repeated, using a camera having a magnetic recording head, as discussed above. As a result, the samples of the present invention were all excellent, having almost no output error in the magnetic reproduction.

Sample No. 7-24 of the present invention contained no antistatic agent, and thus had an electric resistance of at least $1 \times 10^{15}\ \Omega$. This sample was inferior to sample Nos. 7-2 to 7-15 of the present invention which each contained an antistatic agent, and thus had an electric resistance of about $1 \times 10^{9}\ \Omega$. The number of output errors in magnetic recording and reproduction using the former was larger than that of the latter. From the foregoing results, it is understood that combination of a magnetic recording material according to the present invention and an antistatic agent is preferred so as to increase the magnetic recording capacity of the material.

Photographic images formed in photographic film sample Nos. 7-2 to 7-15 of the present invention were excellent with respect to clearness, gradation, color reproduction and sharpness. In contrast, the photographic images formed in aged control sample No. 7-1 and aged comparative sample Nos. 7-16 to 7-20 were poor especially with respect to sharpness.

EXAMPLE 8

Sample Nos. 8-1 to 8-20 were prepared in the same manner as in the preparation of sample Nos. 7-1 to 7-20, respectively, of Example 7, except that the same reversal color emulsion layers as those of Sample No. 101 in Example 1 of JP-A-2-854 were coated.

Briefly, the samples included an antihalation layer as a first layer, an interlayer as a second layer, red-sensitive emulsion layers as the third to fifth layers, green-sensitive emulsion layers as the seventh to ninth layers, blue-sensitive emulsion layers as the eleventh to thirteenth layers, protective layers as the fourteenth and fifteenth layers, and interlayers as the sixth and tenth layers.

Color reversal development of the samples was effected with CR-56 (tradename), using a developing machine ("E-6360 Model", tradename).

Sample Nos. 8-2 to 8-15 of the present invention were excellent, having almost no output error in magnetic recording and reproduction; while aged control sample No. 8-1 and aged comparative sample Nos. 8-16 to 8-20 were extremely bad, having a large number of output errors in magnetic recording and reproduction.

Photographic film sample Nos. 8-2 to 8-15 of the present invention gave excellent photographic images.

As explained in detail hereinabove, the present invention provides a silver halide photographic material having thereon a magnetic recording layer containing a magnetic material including magnetic grains surface-treated with one or more silane coupling agents or titanium coupling agents. Both the dispersibility and the dispersion stability of the magnetic material are improved by the surface treatment. The transparency of the photographic material and the magnetic characteristics thereof are good.

## Claims

**1.** A silver halide photographic material, comprising a support and one or more silver halide emulsion layers located on one or more surfaces of the support, and one or more magnetic recording layers, each magnetic recording layer having a coercive force of at least 400 Oe, characterized in that the magnetic recording layer contains 10 to 300 mg/m$^2$ of a magnetic material comprising magnetic grains which have a surface area of from 2 to 100 m$^2$/g and a mean grain size of from 0.01 to 0.8 µm, and said grains have been surface-treated with 1 to 200% by weight, based upon the weight of the magnetic grains, of at least one silane coupling agent represented by formula (I) and/or titanium coupling agent represented by formula (II):

$$(X_1)_{n1}\text{-Si-}(R_1)_{4-n1} \qquad \text{(I)}$$

$$(X_2)_{n2}\text{-Ti-}(R_2)_{4-n2} \qquad \text{(II)}$$

wherein $X_1$ and $X_2$ each represents a halogen atom or a substituted or unsubstituted alkoxy group having from 1 to 20 carbon atoms;

$R_1$ and $R_2$ each represents a substituted or unsubstituted alkenyl or aryl group having from 1 to 45 carbon atoms or a $-(CH_2)_{m1}-(Y)_{n3}-R_4$ group, wherein Y represents -O-, -S-, -NH-, -CO-, -CONH-, -NHCO-, $-SO_2-$, $-SO_2NH-$, $-NHSO_2-$ or $-C_6H_4-$, $R_4$ represents a H atom, $-C_{m2}H_{2m2+1}$, $-C_{m2}H_{2m2-1}-CH=CH_2$, $-CH(CH_3)=CH_2$, $-N(R_5)_2-$, $-N(+)(R_5)_3 \cdot Z(-)$ , $-[(CH_2)_{m3}O]_{m4}-R_6$, $-(CH_2CH(OH)CH_2O)_{m4}-R_6$, $-(CF_2)_{m2}F$, $(CH_2)_{m2}C_6H_5$, an epoxy group, a glycidyl group, -NCO, -COOM, $-SO_3M$, $-C_6H_4-R_5$ or $-P(=0)0-P(=O)O(OR_5)_2$, wherein $R_5$ represents an alkyl group having from 1 to 18 carbon atoms, $R_6$ has the same meaning as $R_5$ or represents $-COR_5$, Z represents a Cl atom or a Br atom, m1 is from 0 to 40, m2 is from 1 to 30, m3 is from 1 to 6, m4 is from 1 to 36, n3 is 0, 1 or 2, and M is a sodium atom, a potassium atom, a hydrogen atom or $NH_4$; and

n1 and n2 each represents an integer of from 1 to 3.

**2.** The silver halide photographic material of claim 1, wherein said magnetic grains are selected from the group consisting of a fine powder of a ferromagnetic iron oxide, a fine powder of a Co-containing ferromagnetic iron oxide, a fine powder of a ferromagnetic chromium dioxide, a fine powder of a ferromagnetic metal, a fine powder of a ferromagnetic alloy, barium ferrite, magnetite or a Co-containing magnetite.

**3.** The silver halide photographic material of claim 1, wherein $X_1$ and $X_2$ each represents a Cl atom or a $-OR_3$ group, wherein $R_3$ represents an alkyl group having up to 8 carbon atoms.

**4.** The silver halide photographic material of claim 1, wherein said magnetic material is prepared by kneading and dispersing the magnetic material in an open kneader during treatment of the magnetic material with the silane coupling agent and/or the titanium coupling agent.

**5.** The silver halide photographic material of claim 1, wherein said support is a material selected from the group consisting of a cellulose derivative and a polyester derivative.

**6.** The silver halide photographic material of claim 5, wherein the cellulose derivative is triacetyl cellulose.

**7.** The silver halide photographic material of claim 5, wherein the polyester derivative is selected from the group consisting of polyethylene terephthalate and polyethylene naphthalate.

**8.** The silver halide photographic material of claim 1, further comprising an antistatic agent located in at least one layer of the photographic material.

**9.** The silver halide photographic material of claim 8, wherein the antistatic agent is selected from the group consisting of an electroconductive metal oxide, an ionic polymer having an electric resistivity of up to $10^{12}$ Ω/cm at 25°C and 10% relative humidity, a fluorine-containing compound and mixtures thereof.

**10.** The silver halide photographic material of claim 1, wherein said support is in a roll from and has been previously heat-treated at a temperature up to the glass transition temperature of the support.

**11.** The silver halide photographic material of claim 1, wherein said support is in a roll form and has been heat-treated at a temperature of at least the glass transition temperature of the support while the material is curled.

**12.** The silver halide photogrpahic material of claim 1, wherein the surface of the support is heat treated.

**13.** The silver halide photographic material of claim 12, wherein the support is heat treated by a method selected from the group consisting of corona discharge treatment, glow discharge treatment, ultraviolet treatment and flame treatment.

**14.** The silver halide photographic material of claim 1, further comprising a lubricant located in a least one layer of the photographic material, the material having a static friction factor of up to 0.25.

**15.** The silver halide photographic material of claim 1, further comprising a matting agent, the matting agent having a mean grain size of from 0.05 to 8 µm.

16. A combination of the silver halide photographic material of any of claims 1 to 15 and a patrone including a patrone body having a spool rotatably provided therein and a photographic material take out mouth, wherein a top of the material is rolled around the spool and the material is taken out of the patrone through the mouth of the patrone body by rotating the spool in a direction corresponding to feeding out the material from the patrone body.

17. A combination of the silver halide photographic material of any of claims 1 to 15 and a photographic camera equipped with a magnetic recording system having a device for writing and reading out magetic recording data, said silver halide photographic material being housed in the camera.

**Patentansprüche**

1. Fotografisches Silberhalogenidmaterial, umfassend einen Träger und eine oder mehrere Silberhalogenidemulsionsschichten, die sich auf einer oder mehreren Oberflächen des Trägers befinden, und eine oder mehrere magnetische Aufzeichnungsschichten, wobei jede magnetische Aufzeichnungsschicht eine Koerzitivfeldstärke von mindestens 400 Oe besitzt, dadurch gekennzeichnet, daß die magnetische Aufzeichnungsschicht 10 bis 300 mg/$m^2$ eines magnetischen Materials enthält, umfassend magnetische Körner mit einer Oberfläche von 2 bis 100 $m^2$/g und einer mittleren Korngröße von 0,01 bis 0,8 μm, und wobei die Körner mit 1 bis 200 Gewichtsprozent, bezogen auf das Gewicht der magnetischen Körner, mindestens eines Silan-Haftvermittlers, dargestellt durch Formel (I), und/oder eines Titan-Haftvermittlers, dargestellt durch Formel (II), oberflächenbehandelt worden sind:

$$(X_1)_{n1}\text{-Si-}(R_1)_{4-n1} \qquad \text{(I)}$$

$$(X_2)_{n2}\text{-Ti-}(R_2)_{4-n2} \qquad \text{(II)}$$

worin

$X_1$ und $X_2$ jeweils ein Halogenatom oder eine substituierte oder unsubstituierte Alkoxygruppe mit 1 bis 20 Kohlenstoffatomen bedeuten;

$R_1$ und $R_2$ bedeuten jeweils eine substituierte oder unsubstituierte Alkenyl- oder Arylgruppe mit 1 bis 45 Kohlenstoffatomen oder eine $-(CH_2)_{m1}-(Y)_{n3}-R_4$-Gruppe, worin Y -O-, -S-, -NH-, -CO-, -CONH-, -NHCO-, $-SO_2-$, $-SO_2NH-$, $-NHSO_2-$ oder $-C_6H_4-$ bedeutet, $R_4$ bedeutet ein Wasserstoffatom, $-C_{m2}H_{2m2+1}$, $-C_{m2}H_{2m2-1}-CH=CH_2$, $-CH(CH_3)=CH_2$, $-N(R_5)_2-$, $-N(+)\ (R_5)_3\cdot Z(-)$, $-[(CH_2)_{m3}O]_{m4}-R_6$, $-(CH_2CH(OH)CH_2O)_{m4}-R_6$, $-(CF_2)_{m2}F$, $(CH_2)_{m2}C_6H_5$, eine Epoxygruppe, eine Glycidylgruppe, -NCO, -COOM, $-SO_3M$, $-C_6H_4-R_5$ oder $-P(=O)O-P(=O)O(OR_5)_2$, worin $R_5$ eine Alkylgruppe mit 1 bis 18 Kohlenstoffatomen bedeutet, $R_6$ hat die gleiche Bedeutung wie $R_5$ oder bedeutet $-COR_5$, Z bedeutet ein Chloratom oder ein Bromatom, m1 liegt im Bereich von 0 bis 40, m2 liegt im Bereich von 1 bis 30, m3 liegt im Bereich von 1 bis 6, m4 liegt im Bereich von 1 bis 36, n3 ist 0, 1 oder 2, und M ist ein Natriumatom, ein Kaliumatom, ein Wasserstoffatom oder $NH_4$; und

n1 und n2 bedeuten jeweils eine ganze Zahl von 1 bis 3.

2. Fotografisches Silberhalogenidmaterial nach Anspruch 1, worin die magnetischen Körner ausgewählt sind aus der Gruppe, bestehend auseinem feinen Pulver eines ferromagnetischen Eisenoxids, einem feinen Pulver eines Kobalt enthaltenden ferromagnetischen Eisenoxids, einem feinen Pulver eines ferromagnetischen Chromdioxids, einem feinen Pulver eines ferromagnetischen Metalls, einem feinen Pulver einer ferromagnetischen Legierung, Bariumferrit, Magnetit oder einem Kobalt enthaltenden Magnetit.

3. Fotografisches Silberhalogenidmaterial nach Anspruch 1, worin $X_1$ und $X_2$ jeweils ein Chloratom oder eine $-OR_3$-Gruppe bedeuten, worin $R_3$ eine Alkylgruppe mit bis zu 8 Kohlenstoffatomen bedeutet.

4. Fotografisches Silberhalogenidmaterial nach Anspruch 1, worin das magnetische Material durch Kneten und Dispergieren des magnetischen Materials in einer offenen Mischvorrichtung hergestellt wird, während das magnetische Material mit dem Silan-Haftvermittler und/oder dem Titan-Haftvermittler behandelt wird.

5. Fotografisches Silberhalogenidmaterial nach Anspruch 1, worin der Träger ein Material ist, ausgewählt aus der Gruppe, bestehend aus einem Cellulosederivat und einem Polyesterderivat.

6. Fotografisches Silberhalogenidmaterial nach Anspruch 5, worin das Cellulosederivat Triacetylcellulose ist.

7. Fotografisches Silberhalogenidmaterial nach Anspruch 5, worin das Polyesterderivat ausgewählt ist aus der Gruppe, bestehend aus Polyethylenterephthalat und Polyethylennaphthalat.

8. Fotografisches Silberhalogenidmaterial nach Anspruch 1, weiterhin umfassend ein antistatisches Mittel, das sich in mindestens einer Schicht des fotografischen Materials befindet.

9. Fotografisches Silberhalogenidmaterial nach Anspruch 8, worin das antistatische Mittel ausgewählt ist aus der Gruppe, bestehend aus einem elektrisch leitfähigen Metalloxid, einem ionischen Polymer mit einem spezifischen elektrischen Widerstand von bis zu $10^{12}$ Ohm/cm bei 25°C und 10 % relativer Feuchtigkeit, einer Fluor enthaltenden Verbindung und Gemischen davon.

10. Fotografisches Silberhalogenidmaterial nach Anspruch 1, worin der Träger in Form einer Rolle vorliegt und zuvor bei einer Temperatur bis zur Glasübergangstemperatur des Trägers wärmebehandelt worden ist.

11. Fotografisches Silberhalogenidmaterial nach Anspruch 1, worin der Träger in Form einer Rolle vorliegt und bei einer Temperatur von mindestens der Glasübergangstemperatur des Trägers, während das Material aufgerollt wurde, wärmebehandelt worden ist.

12. Fotografisches Silberhalogenidmaterial nach Anspruch 1, worin die Oberfläche des Trägers wärmebehandelt worden ist.

13. Fotografisches Silberhalogenidmaterial nach Anspruch 12, worin der Träger mit einem Verfahren wärmebehandelt worden ist, ausgewählt aus der Gruppe, bestehend aus einer Koronaentladungsbehandlung, einer Glühentladungsbehandlung, einer Ultraviolettstrahlenbehandlung und einer Flammenbehandlung.

14. Fotografisches Silberhalogenidmaterial nach Anspruch 1, weiterhin umfassend ein Gleitmittel, das sich in mindestens einer Schicht des fotografischen Materials befindet, wobei das Material einen Haftreibungsfaktor von bis zu 0,25 besitzt.

15. Fotografisches Silberhalogenidmaterial nach Anspruch 1, weiterhin umfassend ein Mattierungsmittel, wobei das Mattierungsmittel eine mittlere Korngröße im Bereich von 0,05 bis 8 μm besitzt.

16. Kombination aus dem fotografischen Silberhalogenidmaterial nach einem der Ansprüche 1 bis 15 und einer Patrone, umfassend einen Patronenkörper mit einer darin angeordneten drehbaren Spule und einer Öffnung zum Entnehmen des fotografischen Materials, worin ein Ende des Materials um die Spule gewickelt ist und das Material durch die Öffnung des Patronenkörpers aus der patrone entnommen wird, indem die Spule in einer geeigneten Richtung gedreht wird, um das Material aus dem Patronenkörper zu entnehmen.

17. Kombination aus dem fotografischen Silberhalogenidmaterial nach einem der Ansprüche 1 bis 15 und einer fotografischen Kamera, ausgestattet mit einem System zur magnetischen Aufzeichnung mit einer Vorrichtung zum magnetischen Schreiben und Lesen von Aufzeichnungsdaten, wobei das fotografische Silberhalogenidmaterial in der Kamera untergebracht ist.

## Revendications

1. Matériau photographique à l'halogénure d'argent comprenant un support et une ou plusieurs couches d'émulsion à l'halogénure d'argent situées sur une ou plusieurs surfaces du support, ainsi qu'une ou plusieurs couches d'enregistrement magnétique, chaque couche d'enregistrement magnétique ayant un champ coercitif d'au moins 400 Oe, caractérisé en ce que la couche d'enregistrement magnétique contient de 10 à 300 mg/$m^2$ d'un matériau magnétique comprenant des grains magnétiques qui possèdent une surface spécifique comprise entre 2 et 100 $m^2$/g et une dimension moyenne de grains comprise entre 0,01 et 0,8 μm et lesdits grains ont été traités à la surface par de 1 à 200 % en masse, par rapport à la masse des grains magnétiques, d'au moins un agent de

couplage du silane représenté par la formule (I) et/ou au moins un agent de couplage du titane représenté par la formule (II) :

$$(X_1)_{n1}\text{-Si-}(R_1)_{4\text{-}n1} \qquad \text{(I)}$$

$$(X_2)_{n2}\text{-Ti-}(R_2)_{4\text{-}n2} \qquad \text{(II)}$$

dans lesquelles

$X_1$ et $X_2$ représentent chacun un atome d'halogène ou un groupement alcoxy substitué ou non substitué ayant de 1 à 20 atomes de carbone ;

$R_1$ et $R_2$ représentent chacun un groupement alcényle ou aryle substitué ou non substitué ayant de 1 à 45 atomes de carbone ou un groupement $-(CH_2)_{m1}-(Y)_{n3}-R_4$, où Y représente -O-, -S-, -NH-, -CO-, -CONH-, -NHCO-, $-SO_2-$, $-SO_2NH-$, $-NHSO_2-$ ou $-C_6H_4-$, $R_4$ représente un atome d'hydrogène, $-C_{m2}H_{2m2+1}$, $-C_{m2}H_{2m2-1}$-$CH=CH_2$, $-CH(CH_3)=CH_2$, $-N(R_5)_2-$, $N(+)(R_5)_3.Z(-)$, $-[(CH_2)_{m3}O]_{m4}-R_6$, $-(CH_2CH(OH)CH_2O)m_4-R_6$, $-(CF_2)m_2F$, $(CH_2)_{m2}C_6H_5$, un groupement époxy, un groupement glycidyle, -NCO, -COOM, $-SO_3M$, $-C_6H_4-R_5$ ou $-P(=O)O-P(=O)O(OR_5)_2$, où $R_5$ représente un groupement alkyle ayant de 1 à 18 atomes de carbone, $R_6$ est tel que défini pour $R_5$ ou représente $-COR_5$, Z représente un atome de chlore ou un atome de brome, m1 est compris entre 0 et 40, m2 est compris entre 1 et 30, m3 est compris entre 1 à 6, m4 est compris entre 1 et 36, n3 vaut 0, 1 ou 2 et M représente un atome de sodium, un atome de potassium, un atome d'hydrogène ou $NH_4$ ; et

n1 et n2 représentent chacun un nombre entier compris entre 1 et 3.

**2.** Matériau photographique à l'halogénure d'argent selon la revendication 1, dans lequel lesdits grains magnétiques sont choisis dans le groupe constitué d'une fine poudre d'un oxyde de fer ferromagnétique, d'une fine poudre d'un oxyde de fer ferromagnétique contenant du cobalt, d'une fine poudre d'un dioxyde de chrome ferromagnétique, d'une fine poudre d'un métal ferromagnétique, d'une fine poudre d'un alliage ferromagnétique, du ferrite de baryum, de la magnétite ou d'une magnétite contenant du cobalt.

**3.** Matériau photographique à l'halogénure d'argent selon la revendication 1, dans lequel $X_1$ et $X_2$ représentent chacun un atome de chlore ou un groupement $-OR_3$ où $R_3$ représente un groupement alkyle ayant jusqu'à 8 atomes de carbone.

**4.** Matériau photographique à l'halogénure d'argent selon la revendication 1, dans lequel ledit matériau magnétique est préparé en mélangeant et en dispersant le matériau magnétique dans un malaxeur ouvert lors du traitement du matériau magnétique par l'agent de couplage du silane et/ou l'agent de couplage du titane.

**5.** Matériau photographique à l'halogénure d'argent selon la revendication 1, dans lequel ledit support est un matériau choisi dans le groupe constitué d'un dérivé de la cellulose et d'un dérivé du polyester.

**6.** Matériau photographique à l'halogénure d'argent selon la revendication 5, dans lequel le dérivé de la cellulose est la triacétylcellulose.

**7.** Matériau photographique à l'halogénure d'argent selon la revendication 5, dans lequel le dérivé du polyester est choisi dans le groupe constitué du poly(téréphtalate d'éthylène) et du poly(naphtalate d'éthylène).

**8.** Matériau photographique à l'halogénure d'argent selon la revendication 1, comprenant de plus un agent antistatique situé dans au moins une couche du matériau photographique.

**9.** Matériau photographique à l'halogénure d'argent selon la revendication 8, dans lequel l'agent antistatique est choisi dans le groupe constitué d'un oxyde métallique électroconducteur, d'un polymère ionique ayant une résistivité électrique allant jusqu'à $10^{12}$ Ω/cm à 25°C et 10 % d'humidité relative, d'un composé fluoré et de leurs mélanges.

10. Matériau photographique à l'halogénure d'argent selon la revendication 1, dans lequel ledit support a la forme d'un rouleau et a été traité thermiquement au préalable à une température allant jusqu'à la température de transition vitreuse du support.

11. Matériau photographique à l'halogénure d'argent selon la revendication 1, dans lequel ledit support a la forme d'un rouleau et a été traité thermiquement à une température d'au moins la température de transition vitreuse du support tandis que le matériau est enroulé.

12. Matériau photographique à l'halogénure d'argent selon la revendication 1, dans lequel la surface du support est traitée thermiquement.

13. Matériau photographique à l'halogénure d'argent selon la revendication 12, dans lequel le support est traité thermiquement par un procédé choisi dans le groupe constitué du traitement par une décharge lumineuse, du traitement par une décharge luminescente, du traitement par les ultraviolets et du traitement à la flamme.

14. Matériau photographique à l'halogénure d'argent selon la revendication 1, comprenant de plus un lubrifiant situé dans au moins une couche du matériau photographique, le matériau ayant un facteur de frottement par adhérence allant jusqu'à 0,25.

15. Matériau photographique à l'halogénure d'argent selon la revendication 1, comprenant de plus un agent de matage, l'agent de matage ayant une dimension moyenne de grains comprise entre 0,05 et 8 µm.

16. Association du matériau photographique à l'halogénure d'argent selon l'une quelconque des revendications 1 à 15 et d'une protection comprenant un corps de protection doté d'une bobine de façon rotative et d'un orifice de prélèvement du matériau photographique, dans laquelle la partie supérieure du matériau est enroulée autour de la bobine et le matériau est prélevé de la protection par l'orifice du corps de protection par rotation de la bobine dans le sens correspondant à l'introduction du matériau à partir du corps de protection.

17. Association du matériau photographique à l'halogénure d'argent selon l'une quelconque des revendications 1 à 15 et d'un appareil photographique équipé d'un système d'enregistrement magnétique ayant un dispositif d'écriture et de lecture des données d'enregistrement magnétique, ledit matériau photographique à l'halogénure d'argent étant inséré dans l'appareil photographique.

Fig. 1

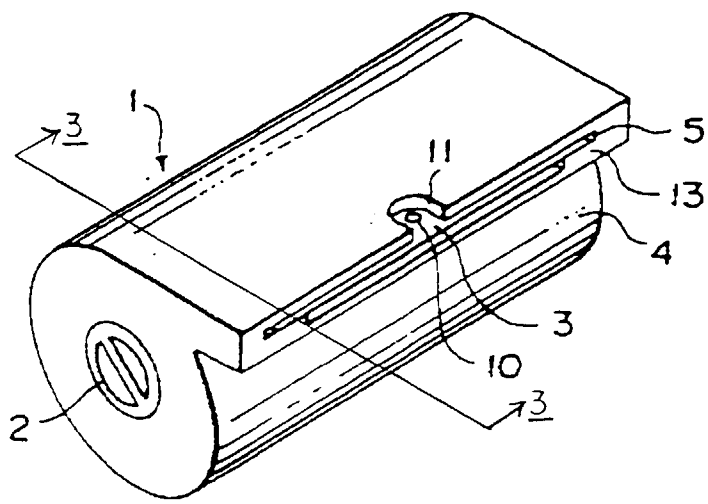


Fig. 2

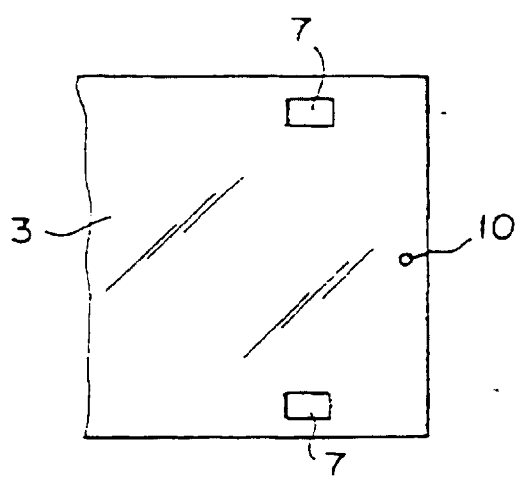

Fig. 3

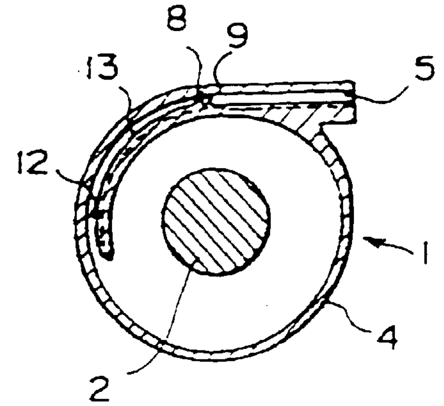


Fig. 4

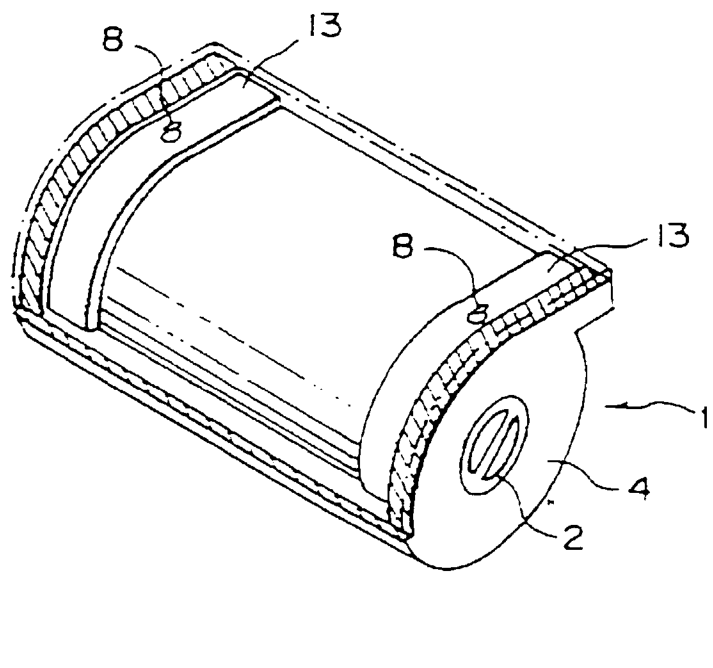

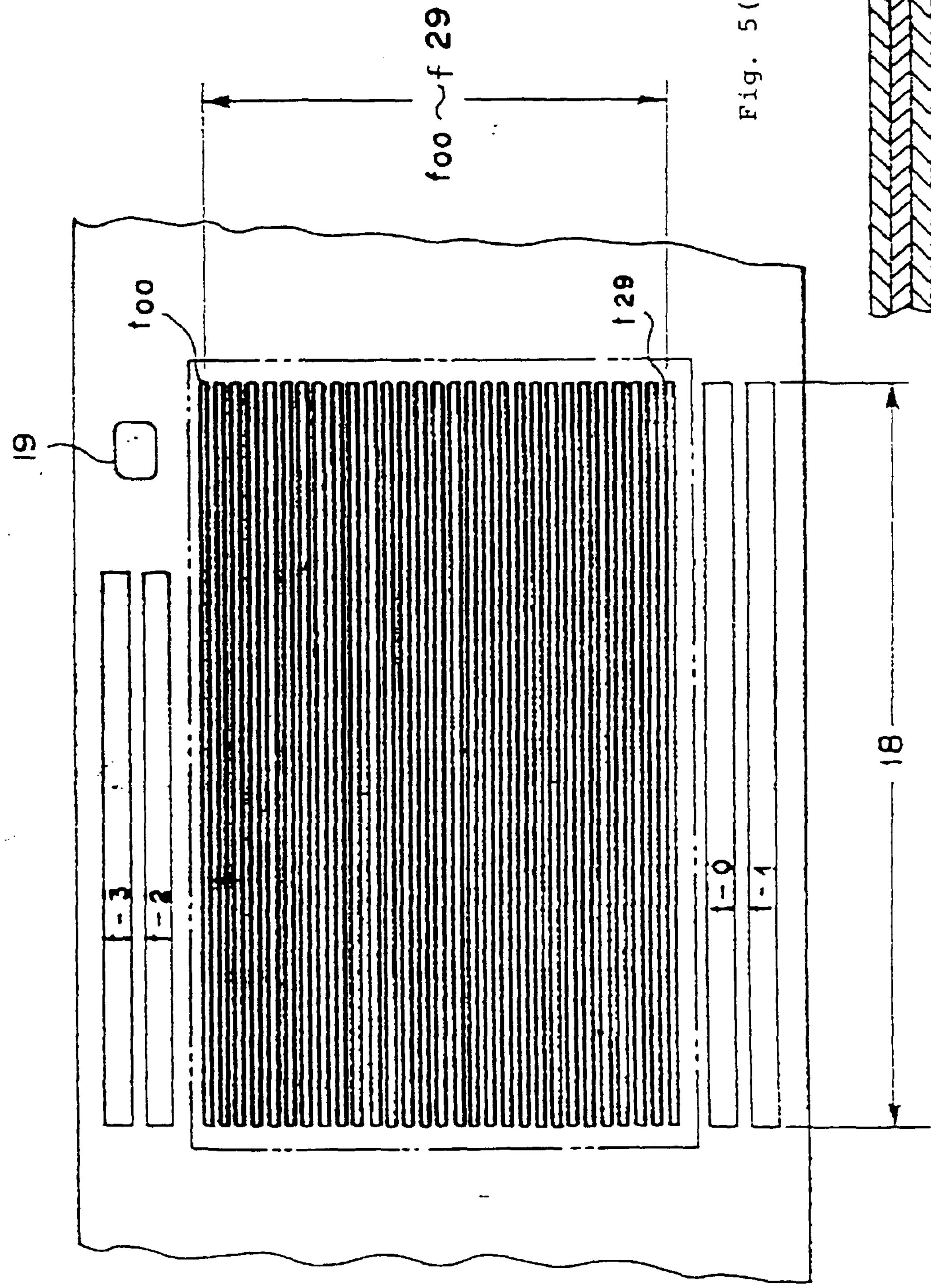


Fig. 5(a)

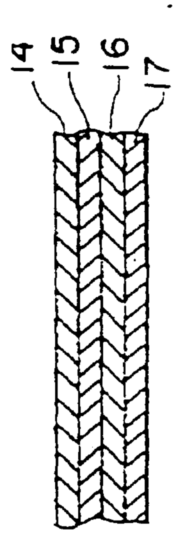


Fig. 5(b)